# EUROPEAN PATENT SPECIFICATION

(11) **EP 2 133 167 B1**
(45) Date of publication and mention of the grant of the patent: **26.10.2011**
(21) Application number: 09162236.5
(22) Date of filing: 09.06.2009
(51) Int. Cl.: B23H 7/06

(54) **Controller of wire-cut electric discharge machine and machining path generation device for wire-cut electric discharge machine**
Steuerung für eine elektrische Drahterodiermaschine und Vorrichtung zur Erstellung eines Bearbeitungswegs für eine elektrische Drahterodiermaschine
Contrôleur de machine de décharge électrique à coupe-pâte et dispositif de génération de voie d'usinage pour la machine de décharge électrique à coupe-pâte

(30) Priority: 10.06.2008 JP 2008151676; 26.09.2008 JP 2008247481; 08.04.2009 JP 2009094246
(43) Date of publication of application: 16.12.2009
(73) Proprietor: FANUC CORPORATION, Oshino-mura Minamitsuru-gun Yamanashi 401-0597 (JP)
(72) Inventor: Kobayashi, Masanori, Minamitsuru-gun, Yamanashi 401-0597 (JP); Hiraga, Kaoru, Minamitsuru-gun, Yamanashi 401-0597 (JP); Kudou, Takehiro, Minamitsuru-gun, Yamanashi 401-0597 (JP)
(74) Representative: Ward, James Norman

(56) References cited:
- JP-A- 4 217 426
- JP-A- 7 009 261
- JP-A- 59 115 125
- JP-A- 2002 011 620
- JP-A- 2004 148 472
- US-A- 5 418 344

## Description

### 1. Field of the Invention

The present invention relates to a controller of a wire-cut electric discharge machine, and more specifically to a controller for controlling a wire-cut electric discharge machine capable of improving machining accuracy of a reentrant corner portion. Further, the present invention relates to a machining path generation device for wire-cut electric discharge machine, and more specifically, to a machining path generation device for wire-cut electric discharge machine, configured to generate a machining path for use in a wire-cut electric discharge machine capable of improving the machining accuracy of a reentrant corner portion.

### 2. Description of Related Art

In performing machining by means of a wire-cut electric discharge machine, if the machine is controlled so that a wire electrode moves along a path assigned by a machining program, a contour of a workpiece (workpiece path) obtained by machining is inevitably deviated from the assigned path.

The workpiece path is deviated from the assigned path mainly because of a non-negligible radius R of the wire electrode and a discharge gap Δgp. Specifically, a deviation of a length equal to the sum of the wire electrode radius R and the discharge gap Δgp is formed between the path of the wire electrode center and the workpiece path. The workpiece size is reduced by a margin equivalent to the deviation.

According to a basic method for avoiding the deviation of this length, the path assigned by the machining program is corrected with an offset amount equivalent to the sum of the wire electrode radius R and the discharge gap Δip, and the wire electrode center is moved along this offset-corrected machining path. Also known is a method of multi-path machining based on the concept of this offset.

In the multi-path machining method, a plurality of machining operations are performed on a workpiece to obtain an intended contour line (workpiece path). The offset amount is gradually reduced (so that (R+Δgp) is asymptotically reached) with every machining operation subsequent to a first machining operation in the multi-path machining. As this is done, a contour line (workpiece path) obtained in each machining operation gradually advances toward the intended contour line. The machining path for each cycle is selected so that the intended contour line is reached in a final machining operation. The aforementioned machining path deviation (deviation between the programmed machining path and the contour actually obtained by machining) should be eliminated by this multi-path machining.

If this machining method is applied to machining of a reentrant corner portion, however, it is difficult to secure high machining accuracy. The reentrant corner portion is a type of shape of a corner portion formed by wire-cut electric discharge machining. Corner portions formed by wire-cut electric discharge machining have various shapes, including combinations of irregular shapes and circular-arc, rectangular, acute, and obtuse shapes. Among the corner portions of these shapes, there is a convex corner portion that is formed of two intersecting blocks, and this will hereinafter be referred to as the "reentrant corner portion".

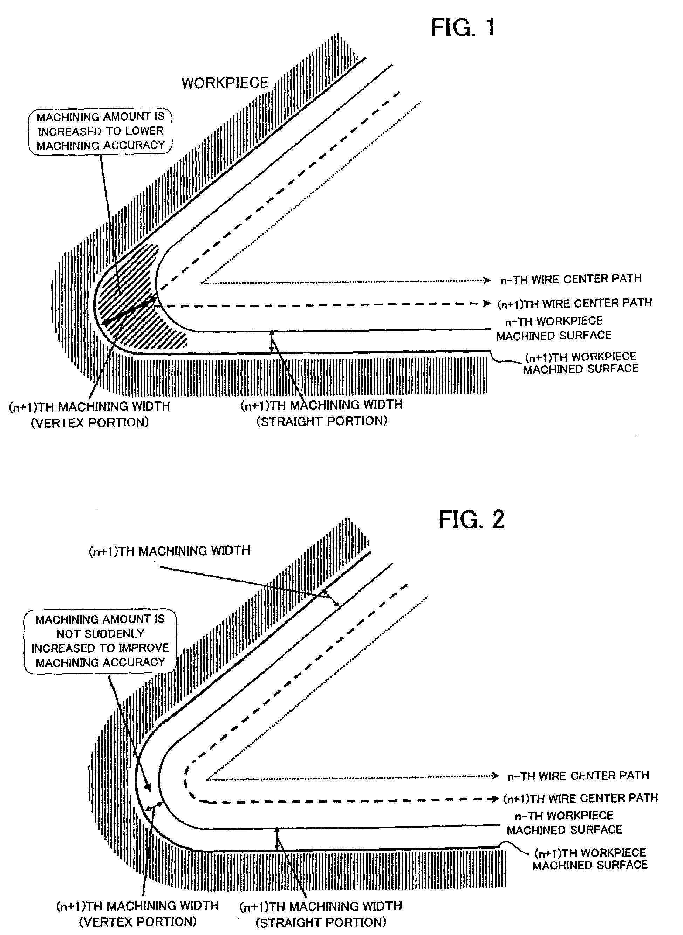

Referring to FIG 1, consideration will be given to conditions for prior art multi-path machining of the reentrant corner portion. It is difficult to improve the machining accuracy for the following reason if the multi-path machining is applied to the reentrant corner portion. The smaller the angle of the reentrant corner portion, the greater the machining depth is, owing to the offset amount. In a finishing stage of the multi-path machining (final or nearly final multi-path machining operation), on the other hand, the workpiece is normally machined in a stripping fashion with very low discharge energy in order to obtain good surface roughness. Thus, if the machining depth is increased beyond the machining capacity in the finishing stage for the reentrant corner portion, short-circuiting occurs between the wire electrode and the workpiece, so that the machining becomes unstable, and the machining accuracy is reduced.

In order to avoid short-circuiting between the wire electrode and the workpiece, a control technique is conventionally used to reduce the machining speed at the reentrant corner portion. It is difficult, however, to definitely learn the degree of speed reduction, which depends on various factors, such as the angle of the reentrant corner portion, electrical machining conditions, etc. Actually, the wire electrode still undergoes short-circuiting if the speed reduction is deficient, and electrical discharge is inevitably concentrated on the workpiece to machine it excessively if the speed reduction is too much.

At the reentrant corner portion, machining paths are concentric despite differences between offset amounts for individual machining operations, so that the machining depth cannot become greater than at straight portions. Basically, therefore, the aforementioned problems cannot be caused.

The following is a summary of publicly known documents related to the aforementioned problems of the multi-path machining for the reentrant corner portion.

JP 5-30568A: A wire-cut shape correction method is proposed in which a circular-arc path is added in machining a reentrant corner portion. If an intersection of machining paths formed of two blocks assigned by a basic program is the intersection of concave machining, according to this correction method, a machining path based on a circular-arc locus of movement of a wire electrode around the intersection, having a radius equal to the offset amount of the wire electrode with respect to the machining path, is added to the intersection portion. This method is intended to remove the roundness of the reentrant corner portion, which causes a problem in die machining or the like, in a first machining operation by adding to the workpiece side the machining path in the form of a circular arc with the radius equal to the offset amount around the block intersection. Specifically, the circular-arc path is designed so that a workpiece is machined in a scooping fashion in the first machining operation without any consideration of the machining accuracy of the corner portion.

JP 2002-11620A: In order to machine a workpiece to a desired shape, a proposal has been made to appropriately set a position where machining conditions are changed in wire-cut electric discharge machining such that the machining conditions that involve a change of the discharge gap of a wire electrode can be changed. In changing an offset at a joint between blocks, according to this method, a corrective block should be inserted into a discontinuous part of a machining path so that the timing for the change of the corresponding machining conditions can be set appropriately. This proposal is not made in consideration of the problem of an increase in machining depth at a reentrant corner portion by the offset.

JP 2004-148472A: A first change point is settled as a position of a wire electrode at which a machining removal distance in an offset locus offset from a predetermined locus starts to become longer or shorter than that for straight machining during a finishing stage. A second change point is settled as a position of the wire electrode at which the machining removal distance ceases to change after the first change point is passed. A third change point is settled as a position of the wire electrode at which the machining removal distance starts to decrease or increase after the second change point is passed. A fourth change point is settled as a position of the wire electrode at which the machining removal distance becomes equal to that for straight machining after the third change point is passed. The machining removal distance is calculated for each predetermined unit distance between the first and fourth change points, an appropriate feed speed is obtained from the calculated machining removal distance, and the feed speed is properly changed for each unit distance between the first and fourth change points.

JP 4-217426A: A technique is disclosed for improving the shape accuracy of a corner portion based on a circular-arc path in a machining program. As rough machining is followed by finish machining, according to this method, a circular-arc portion in a machining shape with a radius smaller than a preset reference radius is machined in a first machining operation, along a machining path in which a circular arc with a radius smaller than a predetermined radius is inserted so as to be in contact with machining paths at the opposite ends of the circular-arc portion. Thereafter, the machining path is changed by gradually increasing the radius of each circular arc to be inserted. This technique is intended to minimize the machining depth in the finishing stage by bringing a rough machining path as deeply into the corner portion as possible. Primarily, therefore, this technique is premised on an object different from that of the present invention, which is intended to improve machining accuracy at a reentrant corner portion (corner portion with a reentrant path in the machining program). Although this prior art technique looks similar to the present invention as far as the insertion of a circular-arc path is concerned, it completely differs from the invention in the way the circular-arc machining path is determined.

JP 7-9261A: Another technique is disclosed for improving the shape accuracy of a corner portion based on a circular-arc path in a machining program. This technique is intended to minimize the, minimum machinable radius so that paths for each machining stage have the same radius at a concave circular-arc portion. To attain this, the locus of movement in inside corner portions in each machining stage is calculated so that the circular-arc loci have the same radius in inside corner machining in machining stages with different offset amounts, and the locus of movement is controlled based on the result of the calculation so that the inside corner radius is constant in each machining stage.

US005418344A discloses in combination the features of the preamble of claims 1,2,6 and 7 and concerns a wire cut electrical discharge machining apparatus or machining a corner in a workpiece, which uses a gap error voltage to generate a command velocity component. A velocity control device is used for clamping a command velocity at not more than a set velocity value. Alternatively, the error voltage is used to generate the combination of an integration component and a transient response component which is used to generate a command velocity. Also, an inside corner with a small minimum corner radius can be machined at high accuracy by defining a plurality machining tracks, which include a circular portion at an inside corner, to have the same radius.

As described above, the machining path along which the wire electrode moves is created by correcting the path in the machining program with the wire offset amount. In the multi-path machining, the offset amount is gradually reduced with every machining operation subsequent to the first machining operation so that the workpiece can be repeatedly machined in a stripping fashion. Owing to this offset amount, however, the smaller the angle at the reentrant corner portion, the greater the depth of machining by the wire electrode is, so that the machining is difficult.

In the finishing stage of the multi-path machining, the workpiece is normally machined in a stripping fashion with very low discharge energy in order to obtain good surface roughness. At the reentrant corner portion that involves an increase in machining depth, therefore, the finish machining capacity is exceeded, so that the machining accuracy is reduced inevitably.

In order to solve these problems, attempts have been made to cope with various situations by providing some parameters. If the number of supposed situations is increased to improve controllability, however, determining the parameters requires a huge amount of time and effort, which is not practical.

### SUMMARY OF THE INVENTION

The present invention provides a wire-cut electric discharge machine, capable of solving the problem of poor machining accuracy attributable to an increase in machining depth and facilitating an improvement in machining accuracy at a reentrant corner portion being subjected to multi-path machining, and a machining path generation device for the wire-cut electric discharge machine.

A controller of a wire-cut electric discharge machine according to the present invention is adapted to machine a workpiece by performing a plurality of machining operations for improving the surface finish on the workpiece. According to an aspect of the present invention, the controller comprises: machining program storage means arranged to store a machining program; offset amount storage means arranged to store wire offset amounts respective for the plurality of machining operations; machining program analysis means arranged to analyze the machining program stored in the machining program storage means; machining shape definition means for defining a machining shape of the workpiece based on an analysis result by the machining program analysis means, characterised by; circular-arc radius storage means arranged to store predetermined radii of circular-arcs for correction of the machining shape; reentrant corner angle storage means arranged to store a predetermined angle for discriminating a reentrant corner portion; reentrant angular corner portion determination means arranged to successively determine an angle formed between one motion block and another motion block in a predetermined number of successive motion blocks defining the machining shape and successively determine a reentrant angular corner portion if the determined angle is not greater than the stored predetermined angle and a circular arc having one of the stored predetermined radii is insertable; and circular-arc shape insertion means arranged to eliminate a part or the whole of each of the successive motion blocks that form the determined reentrant angular corner portion and insert a circular-arc motion block having one of the stored predetermined radii into an eliminated portion of the reentrant angular corner portion, to correct the machining shape.

According to another aspect of the present invention, the controller comprises: machining program storage means arranged to store a machining program; offset amount storage means arranged to store wire offset amounts respective for the plurality of machining operations; machining program analysis means arranged to analyze the machining program stored in the machining program storage means; machining shape defining means arranged to define a machining shape of the workpiece based on an analysis result by the machining program analysis means; circular-arc radius storage means arranged to store predetermined radii of circular-arcs for correction of the machining shape; and circular-arc shape insertion means arranged to eliminate a vertex portion of a reentrant angular corner portion formed by two intersecting nonparallel motion blocks defining the machining shape and insert a circular-arc motion block having one of the stored predetermined radii to the eliminated vertex portion of the reentrant angular corner portion, to correct the machining shape.

The controller may further comprise machining path definition means arranged to define machining paths for the plurality of machining operations by respectively offsetting the corrected machining shape by the wire offset amounts stored in the offset amount storage means.

A machining path generation device for a wire-cut electric discharge machine of the present invention is adapted to machine a workpiece by performing a plurality of machining operations for improving the surface finish on the workpiece. According to an aspect of the present invention, the machining path generation device comprising: machining program storage means arranged to store a machining program; offset amount storage means arranged to store wire offset amounts respective for the plurality of machining operations; machining program analysis means arranged to analyze the machining program stored in the machining program storage means; machining shape definition means for defining a machining shape of the workpiece based on an analysis result by the machining program analysis means, characterised by; circular-arc radius storage means arranged to store predetermined radii of circular-arcs for correction of the machining shape; reentrant corner angle storage means arranged to store a predetermined angle for discriminating a reentrant corner portion; reentrant angular corner portion determination means arranged to successively determine an angle formed between one motion block and another motion block in a predetermined number of successive motion blocks defining the machining shape and successively determine a reentrant angular corner portion if the determined angle is not greater than the stored predetermined angle and a circular arc having one of the stored predetermined radii is insertable; and circular-arc shape insertion means arranged to eliminate a part or the whole of each of the successive motion blocks that form the determined reentrant angular corner portion and insert a circular-arc motion block having one of the stored predetermined radii into an eliminated portion of the reentrant angular corner portion, to correct the machining shape.

According to another aspect of the present invention, the machining path generation device comprises: machining program storage means arranged to store a machining program; offset amount storage means arranged to store wire offset amounts respective for the plurality of machining operations; machining program analysis means arranged to analyze the machining program stored in the machining program storage means; machining shape defining means arranged to define a machining shape of the workpiece based on an analysis result by the machining program analysis means; circular-arc radius storage means arranged to store predetermined radii of circular-arcs for correction of the machining shape; and circular-arc shape insertion means arranged to eliminate a vertex portion of a reentrant angular corner portion formed by two intersecting nonparallel motion blocks defining the machining shape and insert a circular-arc motion block having one of the stored predetermined radii to the eliminated vertex portion of the reentrant angular corner portion, to correct the machining shape.

The machining path generation device may further comprise machining path definition means arranged to define machining paths for the plurality of machining operations by respectively offsetting the corrected machining shape by the wire offset amounts stored in the offset amount storage means.

The circular-arc shape insertion means may insert the circular-arc motion block in contact with two motion blocks constituting the reentrant angular corner portion.

The motion blocks may be straight-line motion blocks.

According to the present invention, an increase in machining amount can be avoided when the reentrant corner portion is subjected to multi-path machining, so that the machining accuracy at the reentrant corner portion can be improved with ease. Since the machining depth is not excessive, short-circuiting cannot easily occur, and finish machining can be smoothly performed despite the use of low discharge energy. In addition, there is no need of any special speed control (low-speed wire movement) or the like for avoiding problems that are attributable to an increase in machining depth.

### BRIEF DESCRIPTION OF THE DRAWINGS

FIG 1 is a diagram illustrating prior art multi-path machining of a reentrant corner portion;
FIG 2 is a diagram illustrating multi-path machining of a reentrant corner portion according to the present invention;
FIG 3 is an example of a flowchart showing an algorithm for the multi-path machining of the reentrant corner portion according to the invention;
FIG 4 is a diagram illustrating a case where a circular arc is not inserted in an n-th machining operation of the invention and is inserted in an (n+1)th machining operation;
FIG 5 is a diagram illustrating a method for inserting a circular-arc radius for correction;
FIG 6 is a diagram illustrating a case where a difference obtained by subtracting an offset amount from the correction circular-arc radius is negative;
FIG. 7 is a diagram illustrating the way of obtaining a circular-arc block to be inserted into a program-commanded shape of the invention and a method for changing two straight lines that form the reentrant corner portion;
FIG. 8 is a first diagram illustrating a method for inserting a circular-arc block not in contact with the two straight lines;
FIG. 9 is a second diagram illustrating the method for inserting the circular-arc block not in contact with the two straight lines;
FIG. 10 is a block diagram showing an outline of a controller for wire-cut electric discharge machine according to an embodiment of the invention;
FIG. 11 is a table showing an example of a memory configuration of machining shape correction circular-arc radius storage means for storing circular-arc radii;
FIG 12 is a diagram showing an example of a machining shape obtained by wire-cut electric discharge machining;
FIG. 13 shows an example of a machining program for obtaining the machining shape shown in FIG. 12;
FIG. 14 is a table showing an example of a memory configuration of offset amount storage means for storing offset amounts;
FIG. 15 is a diagram showing a machining shape example for the case of wire-cut electric discharge machining using the controller shown in FIG. 10;
FIG 16 is a diagram illustrating a correction circular-arc radius command and offset amount commands for the machining program for obtaining the machining shape shown in FIG. 15;
FIG. 17 is a diagram showing a main machining program for obtaining the machining shape shown in FIG. 15;
FIG. 18 is a diagram showing an example of a subprogram to be called by the main program shown in FIG. 17;
FIG 19 is a flowchart illustrating an outline of processing of the wire-cut electric discharge machine in which a machining shape including a reentrant corner portion is obtained by multi-path machining, principally an algorithm for processing associated with insertion of a circular-arc path;
FIG. 20 is a block diagram showing an outline of a machining path generation device for wire-cut electric discharge machine according to another embodiment of the invention;
FIG. 21 is a flowchart illustrating an outline of processing of the machining path generation device in which a machining shape including a reentrant corner portion is obtained by multi-path machining, principally an algorithm for processing associated with insertion of a circular-arc path;
FIG 22 is a diagram illustrating how a part of a reentrant corner portion formed of two intersecting nonparallel motion blocks is eliminated and a circular arc is inserted there;
FIG. 23 is a diagram illustrating a case where a corner portion formed of three or more blocks cannot be recognized and no circular arc is insertable;
FIG. 24 is a diagram illustrating a method in which a circular arc can also be inserted into a corner portion formed of three or more blocks;
FIG. 25 is a diagram illustrating a method in which a circular arc is insertable even when a corner R smaller than the diameter of a wire is inserted;
FIG 26 is a diagram illustrating an outline of a wire-cut electric discharge machine that executes processing in a case where a reentrant corner portion is formed of two or more blocks;
FIG 27 is a flowchart illustrating an outline of processing of the wire-cut electric discharge machine in which a machining shape including a reentrant corner portion is obtained by multi-path machining, principally an algorithm for processing associated with insertion of a circular-arc path for the case where the reentrant corner portion is formed of two or more blocks;
FIG. 28 is a diagram illustrating a case where conditions 1 and 2 are satisfied;
FIG 29 is a diagram illustrating a case where the condition 1 is not satisfied;
FIG 30 is a diagram illustrating a case where the condition 1 is satisfied and the condition 2 is not;
FIG. 31 is a diagram illustrating another case where the conditions 1 and 2 are satisfied;
FIG 32 is a block diagram showing an outline of the machining path generation device and illustrates processing for the case where the reentrant corner portion is formed of two or more blocks;
FIG 33 is a flowchart illustrating an outline of processing of the machining path generation device in which a machining shape including a reentrant corner portion formed of two or more blocks is obtained by multi-path machining, principally an algorithm for processing associated with insertion of a circular-arc path;
FIG. 34 is a block diagram showing essential parts of a controller of a wire-cut electric discharge machine according to an embodiment of the present invention; and
FIG. 35 is a block diagram showing essential parts of one embodiment of a machining path generation device of the present invention.

### DETAILED DESCRIPTION

The present invention is intended to improve the machining accuracy of a reentrant corner portion (concave corner portion formed of two intersecting motion blocks) in multi-path machining for finishing. In order to improve the machining accuracy, according to the present invention, problems are solved by devising a way of changing a machining path, including insertion of a circular-arc motion block (hereinafter simply referred to as the "circular-arc block"), as shown in FIG 2, based on the machining characteristics of the reentrant corner portion in the multi-path machining.

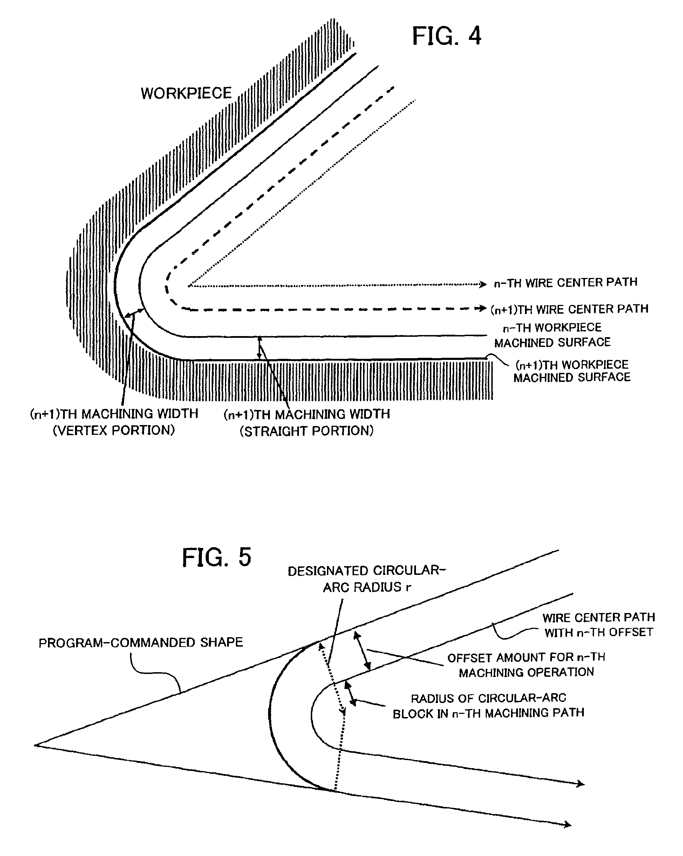

A method of the present invention will be described with reference to FIG. 4. According to this method, problems are solved by inserting the circular-arc block into the reentrant corner portion of a program-commanded shape. FIG. 4 shows a case where a circular-arc block is not inserted in an n-th machining operation of the multi-path machining and is inserted in an (n+1)th machining operation. In the n-th machining operation, a wire electrode linearly moves along an "n-th wire center path", and at a vertex portion, a machined surface of the workpiece by the n-th machining operation is formed into a circular-arc as shown in FIG. 4 due to the diameter of the wire electrode.

In the next (n+1)th machining operation, a circular-arc path is inserted into the reentrant corner portion. A method for inserting the circular-arc path will be described in detail later. The wire electrode moves along an "(n+1)th wire center path". Just short of the reentrant corner portion, the wire electrode is laterally discharged as it moves closely along the "n-th workpiece machined surface" and then removes a "(n+1)th machining width (straight portion)" in a stripping fashion as the machining advances. Thereupon, an "(n+1)th workpiece machined surface" is formed.

When the wire electrode then further moves and comes to the vertex portion of the reentrant corner portion, it advances in a circular arc, and even at the vertex portion of the reentrant corner portion, is discharged as it moves closely along the "n-th workpiece machined surface". Then, the wire electrode removes a "(n+1)th machining width (vertex portion)" in a stripping fashion as the machining advances, whereupon the "(n+1)th workpiece machined surface" is formed. Since the machining width at the vertex portion is equivalent to that at the straight portion, electric discharge energy cannot be deficient, so that short-circuiting that reduces the machining accuracy can be suppressed.

The following is a description of an influence of the insertion of the circular-arc path. If the machining path is changed, as mentioned before, the shape of the workpiece may possibly be supposed to become different from ones designated in drawings or the like. In general, however, the change of the machining path attributable to the aforementioned insertion of the circular-arc path is negligible at the reentrant corner portion in wire-cut electric discharge machining.

It is known, in the wire-cut electric discharge machining, that the machining shape of the reentrant corner portion, unlike the shape of the machining path, is the shape of a circular arc, since the cross-sectional shape of the wire electrode is circular. Since the size of the circular-arc portion depends on the diameter of the wire electrode used in the electric discharge machining, discharge energy, offset amount, or corner angle, the finished shape of the reentrant corner portion is basically indefinite.

If the finished shape of the reentrant corner portion must be definitely designated, therefore, the shape of a circular arc with a radius greater than the sum of the radius of the wire electrode used and the width of a discharge gap is specified in general. Since the creation of a machining program is laborious, however, it is not seldom that the machining program is designed for a reentrant angle at which two motion blocks simply cross each other if the shape need not be clarified in particular or if the execution of post-processing such as polishing is determinate.

For this reason, the reentrant corner portion requires formation of adjacent motion blocks without deficient or excessive machining and connection of the two blocks by a smooth circular arc. This can be satisfactorily achieved by the present invention.

The radius of curvature (or circular-arc radius) of the inserted circular-arc configuration is generally settled depending on any of offset amounts that are used in first to about third machining operations that enjoy relatively high discharge energy. Primarily, the reference offset amount is less than that used in the first machining operation and more than that used in the about third machining operation. Further, the magnitude of discharge energy used varies depending on the final machining accuracy and surface roughness that are required of the workpiece to become a product, despite the same number of machining operations. Possibly, therefore, the curvature radius of the inserted circular-arc configuration may vary depending on the purpose of machining.

A method for inserting a circular-arc path into a programmed configuration will now be described in detail with reference to FIGS. 5 to 9. A method of circular-arc block insertion will be described first. The circular-arc block insertion implies the insertion of the circular-arc path into the programmed configuration.
(1) The circular-arc block with an assigned radius is inserted (circular arc insertion means) into the programmed configuration (machining shape definition means) (see FIG. 5).
(2) The shape of a circular-arc corner formed in item (1) is offset by an offset amount (machining path definition means) (see FIG. 5).

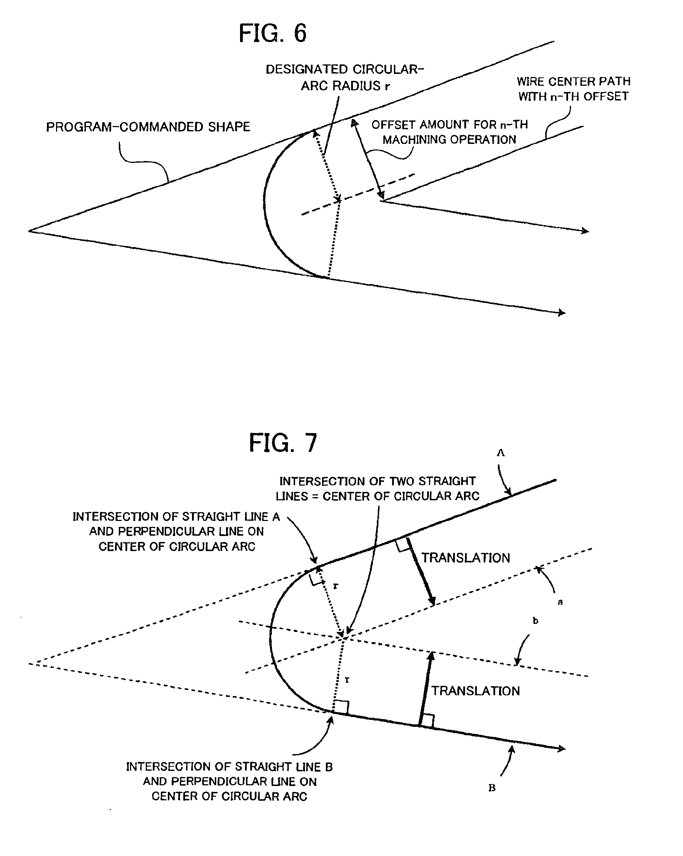

A circular-arc block formed in an n-th machining path can be obtained offsetting the circular-arc block inserted into the programmed configuration for a predetermined offset amount for the n-th machining operation. The curvature radius of the obtained circular-arc block is a difference equivalent to "specified circular-arc radius minus offset amount for n-th machining operation". If this difference is negative, that is, if the offset amount for the n-th machining operation is greater than the assigned circular-arc curvature radius, the circular-arc portion is eliminated (see FIG. 6). This is a prior art wire-offset technique.

The following is a description of the way of obtaining the circular-arc block to be inserted into the programmed configuration and a method for changing the two motion blocks that form the reentrant corner portion by the insertion of the circular-arc block, with reference to FIG. 7.

If two parallel straight lines a and b that are spaced apart from each other at a distance equal to a radius r of an inserted circular arc in the offset direction are formed individually from two straight lines A and B that form the reentrant corner portion, the intersection of the lines a and b lies on the center of the circular arc. Of the two straight lines A and B that form the reentrant corner portion, the end point of a straight block just short of the vertex of the corner portion and the start point of a straight line just ahead of the center of the circular arc are changed individually into intersections with perpendicular lines from the center of the circular arc. This technique is similar to the conventional technique for insertion into a corner R.

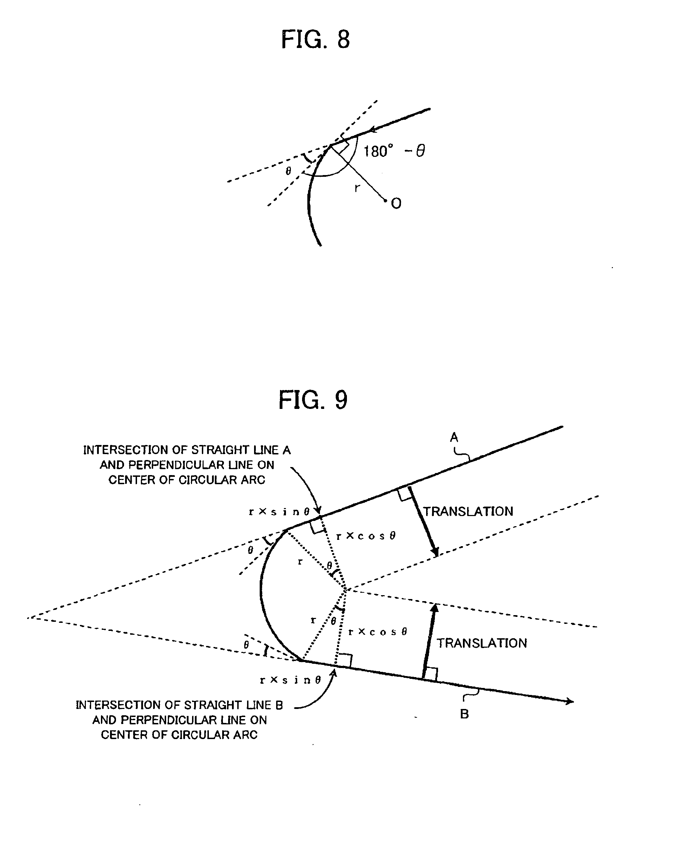

In the circular arc insertion method, a circular-arc block to be inserted need not always be configured to contact two straight lines. Insertion of one such circular-arc block will now be described with reference to FIGS. 8 and 9.

In inserting a circular arc at an angle to a straight line (180° - 0), as shown in FIG. 8, its center can be obtained (see FIG. 9) by inserting the circular arc with a radius of (r x cosθ) (where r is the curvature radius of the circular arc) based on the method for obtaining the circular arc in contact with the two straight lines (see FIG. 7).

Of the two straight lines that form the reentrant corner portion, the end point of the straight block just short of the vertex of the corner portion and the start point of the straight line just ahead of the center of the circular arc are moved by a length of (r x sinθ) on the corner vertex side.

As mentioned before (see FIGS. 7 to 9), the circular-arc block may be inserted in such a manner that the straight and circular-arc blocks smoothly contact each other or are connected within a predetermined angular range.

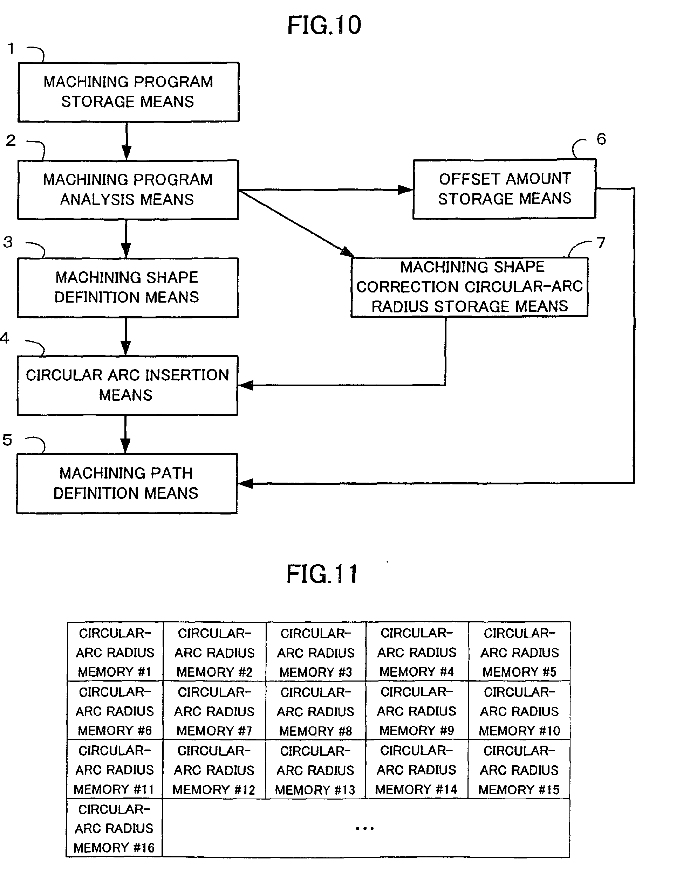

A controller for wire-cut electric discharge machine according to an embodiment of the present invention, capable of inserting a circular-arc block into a reentrant corner portion, will now be described with reference to FIG. 10. The controller of the present embodiment is provided with machining program storage means 1, machining program analysis means 2, machining shape definition means 3, circular arc insertion means 4, machining path definition means 5, offset amount storage means 6, and machining shape correction circular-arc radius storage means 7.

The following is a description of the means 1 to 7. The machining program storage means 1 is a means for storing a necessary machining program for machining and is composed of a nonvolatile memory. The machining program storage means 1 is pre-stored with a large number of machining programs.

The machining program analysis means 2 is a means for analyzing a machining program specified by an operator or the like, out of the machining programs stored in the machining program storage means 1, extracting data associated with the machining shape, and delivering the extracted data to the machining shape definition means 3. Further, the machining program analysis means 2 is configured to assign a necessary offset amount from an offset amount command code in the machining program to the offset amount storage means 6 and to assign a necessary circular-arc radius for machining shape correction from a machining shape correction circular-arc radius command code in the machining program to the circular-arc radius storage means 7.

The machining shape definition means 3 is a means for creating a machining shape based on data for the machining shape delivered from the machining program analysis means 2.

The offset amount storage means 6 is stored with a large number of necessary offset amounts of the wire electrode for machining. It is a means for selecting a necessary offset amount for each machining operation in accordance with an instruction from the machining program analysis means 2 and delivering the amount to the machining path definition means 5.

The machining shape correction circular-arc radius storage means 7 is stored with a large number of necessary machining shape correction circular-arc radii for machining. It is a means for selecting a machining shape correction circular-arc radius in accordance with an instruction from the machining program analysis means 2 and delivering the radius to the circular arc insertion means 4. As shown in FIG. 11, for example, the circular-arc radii are stored in the machining shape correction circular-arc radius storage means 7.

The circular arc insertion means 4 is a means for receiving a necessary machining shape correction circular-arc radius for machining from the machining shape correction circular-arc radius storage means 7, correcting the machining shape created by the machining shape definition means 3 by inserting the circular-arc block into the reentrant corner portion that is formed of the two intersecting motion blocks, and thereby re-creating a target machining shape.

The machining path definition means 5 is a means for receiving the data for the machining shape created by the circular arc insertion means 4 and the offset amount for each machining operation from the offset amount storage means 6 and, based on these data, creating a machining path along which the center of the wire electrode actually moves.

Machining is performed in the following steps of procedure using the controller according to the present embodiment. The machining program to be executed is supposed to have been pre-stored in the machining shape correction circular-arc radius storage means 7 by the operator. The offset amount and the machining shape correction circular-arc radius are supposed to have been pre-stored in the offset amount storage means 6 and the machining shape correction circular-arc radius storage means 7, respectively.

The following is a description of how the machining path is generated from the machining program processed by the controller for wire-cut electric discharge machine. If the operator first selects the machining program to be processed from the machining program storage means 1 (e.g., on a screen of a display device (not shown) of the controller for electric discharge machine), this machining program is delivered from the storage means 1 to the machining program analysis means 2. The analysis means 2 analyzes the machining program delivered from the storage means 1, extracts the machining program data for the machining shape from the machining program, and delivers the data to the machining shape definition means 3. Further, the machining program analysis means 2 instructs the offset amount storage means 6 to deliver the necessary offset amount to the machining path definition means 5 in accordance with the offset amount command code in a block of the machining program. Furthermore, the analysis means 2 instructs the machining shape correction circular-arc radius storage means 7 to deliver the necessary machining shape correction circular-arc radius to the circular arc insertion means 4 in accordance with the machining shape correction circular-arc radius command code in a block of the analyzed machining program.

The machining shape definition means 3 creates the machining shape based on the data for the machining shape delivered from the machining program analysis means 2 and delivers the created machining shape to the circular arc insertion means 4.

The circular arc insertion means 4 corrects the machining shape delivered from the machining shape definition means 3 by inserting the circular-arc block into the reentrant corner portion that is formed of the two intersecting motion blocks, thereby re-creating the target machining shape, and delivers the target machining shape to the machining path definition means 5.

The machining path definition means 5 creates the machining path along which the wire electrode actually moves, based on the data for the machining shape delivered from the circular arc insertion means 4 and the offset amount for each machining operation delivered from the offset amount storage means 6.

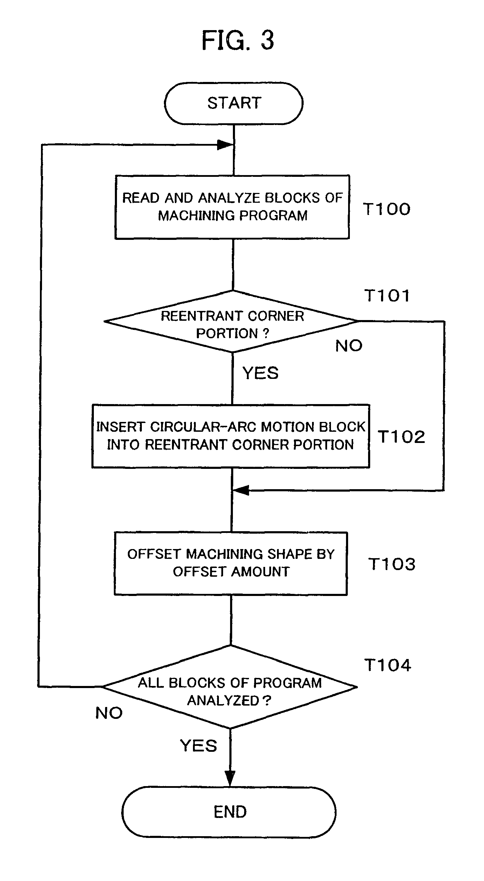

The analysis of the machining program and the generation of the machining path will be described with reference to the flowchart of FIG. 3 showing an algorithm for the multi-path machining of the reentrant corner portion shown in FIG 3. First, blocks of the machining program are read and analyzed (Step T100), and it is determined whether or not the corner portion is reentrant (Step S101). If the corner portion is reentrant, the circular-arc block is inserted into it (Step S102). If not, the circular-arc block is not inserted. Then, the machining shape is offset by the offset amount (Step T103), and it is determined whether or not the analysis of all the blocks of the machining program is finished. If there is any block to be analyzed, the procedure returns to Step T100 and the processing is continued. If the analysis of all the blocks is finished, it is concluded that the analysis of the machining program is finished, and the processing is terminated (Step T104).

While it is determined in Step T101 of the flowchart of the algorithm whether or not the corner portion is reentrant, the reentrant corner portion should be identified in the controller in order to actually insert the circular-arc path into the reentrant corner portion by using the controller in the aforementioned manner. If the corner portion is formed of two blocks, it can be a reentrant corner portion. However, this arrangement cannot eliminate the possibility of the corner portion being salient.

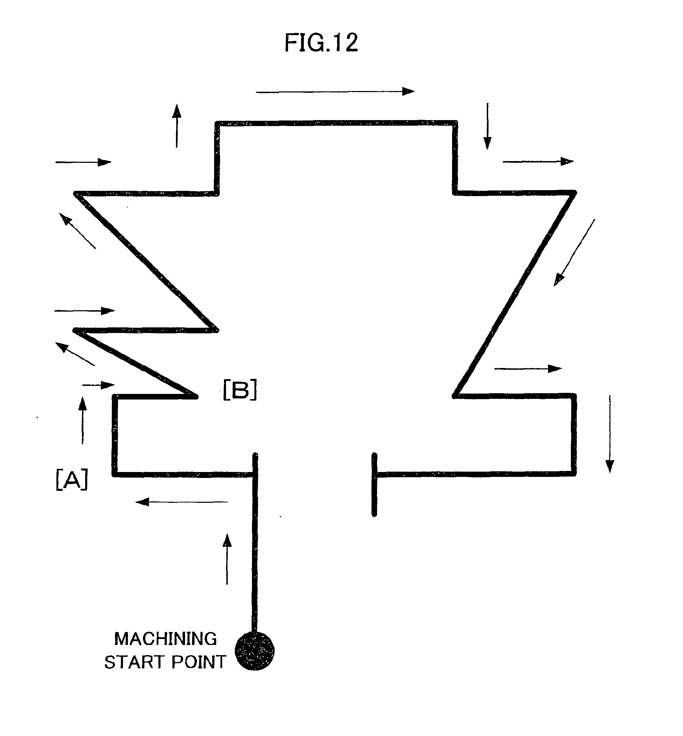

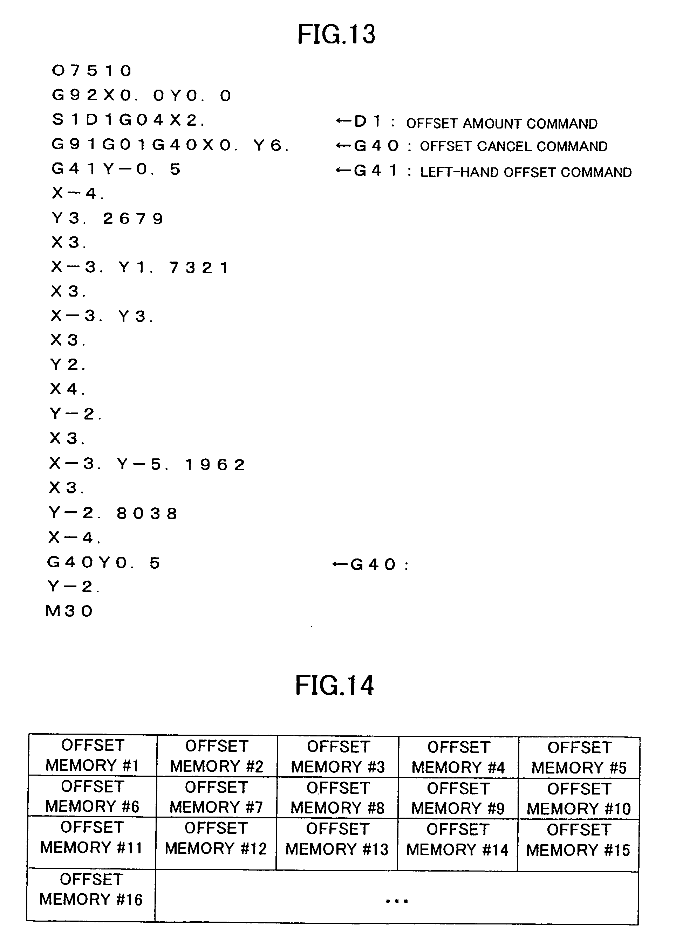

This point will be described with reference to FIGS. 12 to 14. FIG. 12 shows an example of the machining shape formed by the wire-cut electric discharge machine. FIG. 13 shows an example of the machining program used to obtain the machining shape shown in FIG. 12. FIG. 14 is a table showing an example of a memory configuration of the offset amount storage means.

In FIG. 12, [A] and [B] indicate examples of salient and reentrant corner portions, respectively. The following is a description of how to identify the reentrant and salient corner portions.

In general, in executing multi-path machining in accordance with a machining program for wire-cut electric discharge machining, the offset amount for each machining operation is assigned based on the machining program. In the example shown in FIG. 13, an offset amount stored in an "offset memory #1" of the offset amount storage means as shown in FIG. 14 are called and used in accordance with a command code "D1".

In a first machining block in which machining is started at a machining start point so that the workpiece is cut into a shape for the product, the offset is normally temporarily canceled (command "G40") in order to prevent wrong setting of its amount and direction or for some other reason. The offset is enabled (command "G41") starting from the block for machining the shape for the actual product. In the example of the machining program shown in FIG 13, the machining path along which the wire electrode actually moves is offset to the left with respect to a path assigned by the machining program. Alternatively, however, the machining path may be offset to the right in accordance with a command code "G42".

In the subsequent machining blocks, the machining is continued with the wire electrode offset to the left until the offset is canceled in accordance with the command code "G40". As this is done, the offset amount is kept at a value designated by "D1".

First, let us suppose a situation that the corner portion [A] is passed after the start of the shape machining for the product. The offset is applied to the left of the path assigned by the machining program, and the corner portion [A] bends on the opposite side from the offset, that is, to the right.

Then, the corner portion [B] bends to the same side as the offset, that is, to the left. If the workpiece to be the product is removed after the machining is finished, the corner portions [A] and [B] become convex and concave, respectively. Specifically, the corner portion that bends opposite from the offset of the wire electrode is a convex corner portion, and the corner portion that bends in the same direction as the offset is a concave corner portion.

Thus, the controller for wire-cut electric discharge machine can discriminate the concavity or convexity of the corner portions by analyzing the machining program and determining "whether each corner portion bends on the same side as or on the opposite side from the offset". Whether or not a corner portion is an angular corner portion can be determined depending on whether or not motion blocks that form the corner portion are "two intersecting blocks".

After all, the "reentrant corner portion" can be identified by the two determinations described above.

At the corner portion judged as reentrant, the circular-arc machining path with the aforementioned radius (see FIGS. 5 to 9) must be actually inserted into the machining paths corresponding individually to the two intersecting blocks at the reentrant corner portion before the wire electrode is actually moved (at least before the reentrant corner portion is reached).

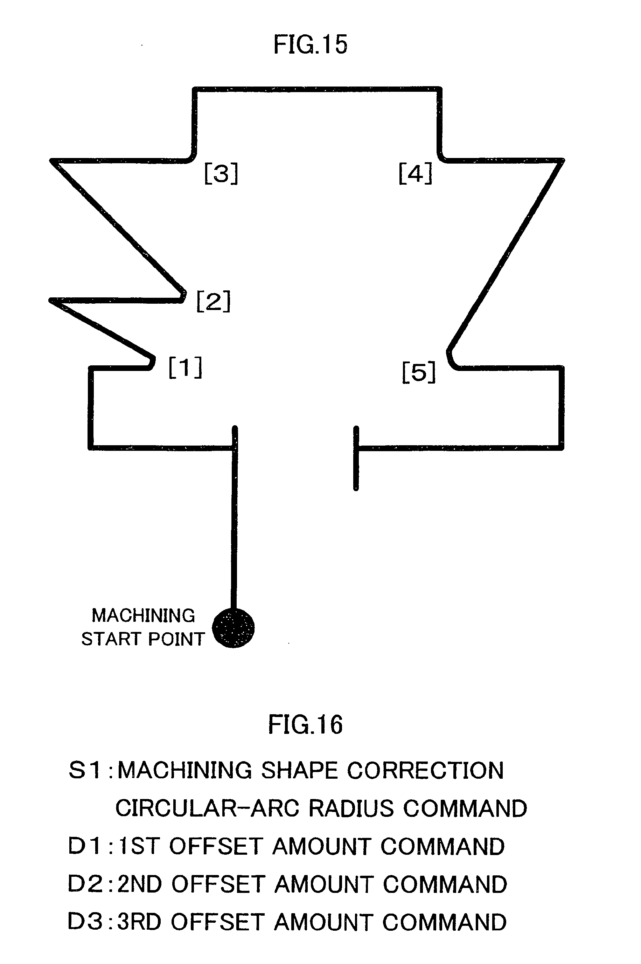

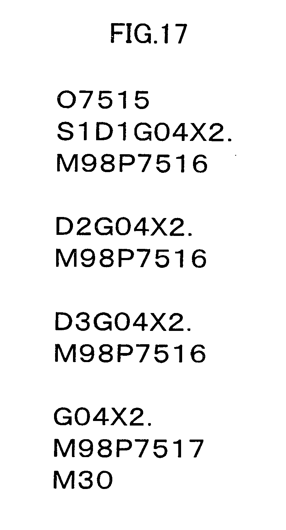

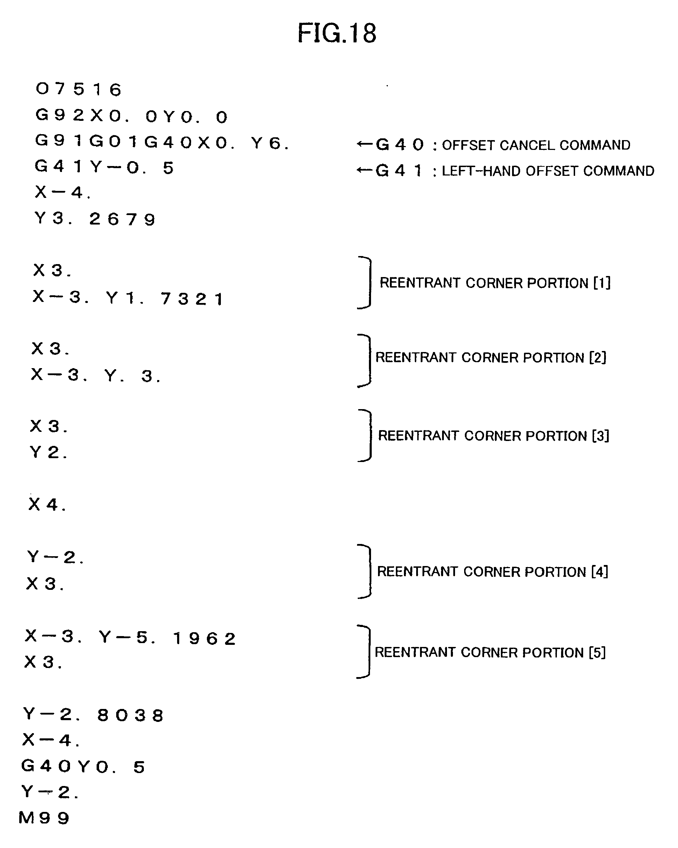

This point will be described with reference to FIGS. 15 to 18. FIG. 15 shows a machining shape obtained by inserting circular arcs with circular-arc radii for machining shape correction individually into five reentrant corner portions (1) to (5) of the machining shape shown in FIG 12. FIG. 16 illustrates a machining shape correction circular-arc radius command and offset amount commands. FIG. 17 shows an example of a main machining program in which the machining shape correction circular-arc radius command and offset amount commands are inserted in order to obtain the machining shape shown in FIG 15. FIG. 18 shows an example of a subprogram to be read according to statements in the main program shown in FIG 17.

According to the main program example shown in FIG 17, a machining subprogram "07516" shown in FIG. 18 is called three times, and wire-cut electric discharge machining is performed. Thereafter, a cut-off subprogram "07517" is called and executed.

In a first machining subprogram call, a machining shape correction circular-arc radius command (S1) and a first offset amount command (D1) are issued. Specifically, an offset amount stored in the offset amount storage means 6 and corresponding to the command (D1) is delivered to the machining path definition means 5. Further, a circular-arc radius stored in the machining shape correction circular-arc radius storage means 7 and corresponding to the command (S1) is delivered to the circular arc insertion means 4.

In a second machining subprogram call, a second offset amount command (D2) is issued. In a third machining subprogram call, a third offset amount command (D3) is issued. In each of the second and third calls, an offset amount is read from the offset amount storage means 6 in response to its corresponding command and delivered to the machining path definition means 5.

In the first to third machining operations, the corner R with a circular-arc radius stored in the machining shape correction circular-arc radius storage means 7 and corresponding to the machining shape correction circular-arc radius command (S1) is inserted into each of the reentrant corner portions (1) to (5) of the machining path by the circular arc insertion means 4. The machining path is defined by the machining path definition means 5 using the offset amounts stored in the offset amount storage means 6 and corresponding to the commands (D1) to (D3), individually. The workpiece is machined in the manner shown in FIG 15. In consequence, a high-precision reentrant corner portion can be obtained.

The cut-off subprogram "07517" is executed after the third multi-path machining operation. Since this subprogram is not related to the machining of the present invention for the reentrant corner portion, however, its description is omitted.

According to this embodiment, moreover, the machining path into which the circular-arc block is inserted is defined by the machining path definition means 5 without editing or modifying the machining program analyzed by the machining program analysis means 2. However, the same effect can be obtained without a problem if the circular-arc block is automatically inserted into the machining program analyzed by the machining program analysis means 2, and edited to generate the machining path by actually creating a machining program having inserted circular-arc blocks.

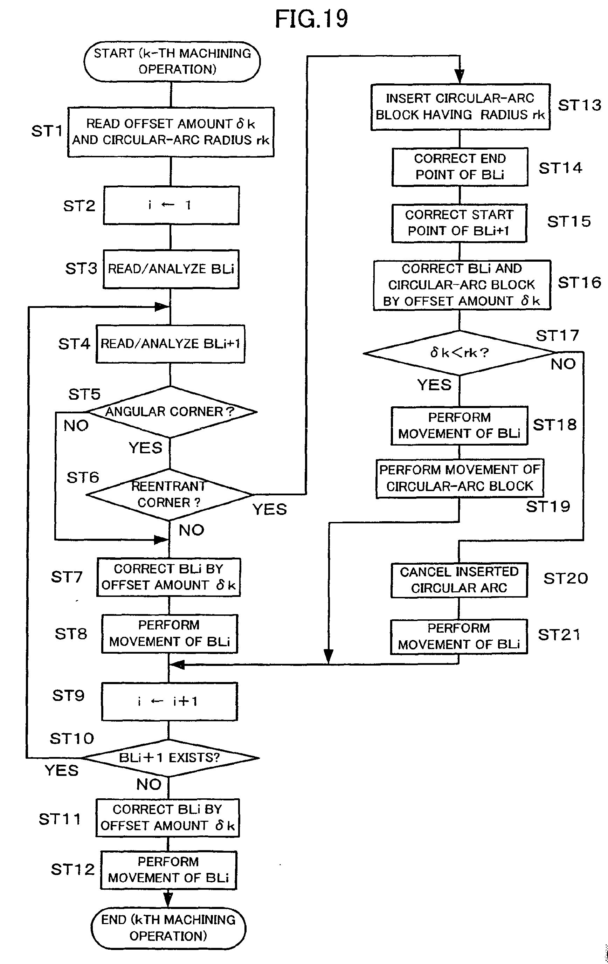

The following is a description of the general flow of processing executed by the controller for wire-cut electric discharge machine according to the embodiment of the present invention in the case where the machining program is used to specify the acquisition of the machining shape including the reentrant corner portion by multi-path machining. FIG. 19 is a flowchart illustrating processing for a k-th (k = 1,2... kfinal) machining operation in the multi-path machining, principally the processing associated with the insertion of the circular-arc path. The symbol kfinal designates the final machining operation.

In this flowchart, "BL" indicates a "block", and i is an index (register value) indicative of a block number. For example, BLi designates an "i-th motion block". The steps will now be described in succession.
- Step ST1: An offset amount dk and a circular-arc radius rk are read. The values dk and rk are assigned by the commands shown in FIG. 16. The processing of Step ST1 includes settlement of the offset amount dk (access to the offset amount storage means 6 and delivery of data for the assigned offset amount dk to the machining path definition means 5) and settlement of the designated circular-arc radius rk (access to the machining shape correction circular-arc radius storage means 7 and delivery of data for the designated circular-arc radius rk to the circular arc insertion means 4).
- Step ST2: The index i is initialized (i ← 1).
- Step ST3: The i-th (first) motion block is read and analyzed.
- Step ST4: An (i+1)-th (second in a first processing cycle) motion block is read and analyzed.
- Step ST5: It is determined whether or not the i-th and (i+1)-th motion blocks form an angular corner portion. If the two blocks are "nonparallel linear motion blocks", the decision in this step is YES and the procedure proceeds to Step ST6. If not, the decision is NO and the procedure proceeds to Step ST7.
- Step ST6: It is determined whether or not the i-th and (i+1)-th motion blocks form a reentrant corner portion. The method of this determination is described above. In this case, whether the angular corner portion is traced to the left or right is determined based on the outer product of vectors (oriented in the direction of movement) indicative of the i-th and (i+1)-th motion blocks. By doing this, a path shift designated by the offset amount dk is checked for direction (to the left or right).

If the decision result is "left turn" so that the path shift designated by the offset amount dk is on the left-hand side with respect to the direction of advance, the angular corner portion concerned is reentrant (YES). Likewise, if the decision result is "right turn" so that the path shift designated by the offset amount dk is on the right-hand side with respect to the direction of advance, the angular corner portion concerned is reentrant (YES). In any other case, the angular corner portion is not reentrant (NO). If the corner portion is reentrant, the procedure proceeds to Step ST13. If not, the procedure proceeds to Step ST7.
- Step ST7: The motion block BLi is offset-corrected by the offset amount dk.
- Step ST8: Processing for movement of the i-th motion block (processing such as interpolation, issuance of move commands for axis servos, etc.) is executed.
- Step ST9: The index i is incremented by 1 (i = i+1).
- Step ST10: The (i+1)-th motion block is checked for presence. If the (i+1)-th motion block is absent, the procedure proceeds to Step ST11. If present, the procedure returns to Step ST4. Since i = 2 is first obtained in Step ST9, a third motion block is supposed to be checked for presence in Step ST10.
- Step ST11: The motion block BLi is offset-corrected by the offset amount dk.
- Step ST12: Processing for movement of the i-th motion block (processing such as interpolation, issuance of move commands for axis servos, etc.) is executed.
- Step ST13: The circular-arc block with the circular-arc radius rk is inserted on the end point side of the motion block BLi and the start point side of a motion block BLi+1.
- Steps ST14 and ST15: The end point of the i-th motion block is corrected so that the end point of a straight path corresponding to the i-th motion block lies on that one of the opposite ends of a V-shaped straight interval eliminated as the circular-arc block is inserted which is on the straight path. Likewise, the start point of the (i+1)-th motion block is corrected so that the end point of a straight path corresponding to the (i+1)-th motion block lies on that one of the opposite ends of the V-shaped straight interval which is on the straight path. Referring to FIG. 5, the V-shaped interval is a section with a programmed configuration (non-offset) on the left-hand side of the circular arc with the assigned radius r.
- Step ST16: The circular-arc block inserted in Step ST13 and the i-th motion block are offset-corrected by the offset amount dk.
- Step ST17: The corner portion judged as reentrant in Step ST6 is checked for the necessity of insertion of motion blocks of the circular-arc path. It is determined whether or not circular-arc radius rk read in Step ST1 is greater than the offset amount dk. If the radius rk is greater, the procedure proceeds to Step ST18. If not, the procedure proceeds to Step ST20.
- Step ST18: Processing for movement of the i-th motion block BLi (processing such as interpolation, issuance of move commands for axis servos, etc.) is executed. The target motion block in this step, having passed Step ST15, is already corrected at the end point of Step ST14.
- Step ST19: Processing for movement of the motion block of the inserted circular-arc path (processing such as interpolation, issuance of move commands for axis servos, etc.) is executed. The next step is Step ST9.
- Step ST20: The inserted circular arc is cancelled, whereupon the procedure proceeds to Step ST21.
- Step ST21: Processing for movement of the i-th motion block (processing such as interpolation, issuance of move commands for axis servos, etc.) is executed. The next step is Step ST9.

If this cycle is repeated for k = 1,2... kfinal, a circular-arc path calculated based on the curvature radius r of the circular arc pre-stored in the machining shape correction circular-arc radius storage means 7 and the offset amount stored in the offset amount storage means 6 is inserted into a reentrant corner portion that requires path modification including circular-arc path insertion, whereby the machining path is settled. The wire electrode moves along this machining path, whereupon high-precision machining can be executed.

In Step ST5, it is determined whether or not the motion blocks read in Steps ST3 and ST4 are "nonparallel linear motion blocks". If the two motion blocks are circular-arc blocks or linear and circular-arc blocks such that the angle between them at the intersection is not 180°, they are regarded as nonparallel as in the case of the two nonparallel linear motion blocks.

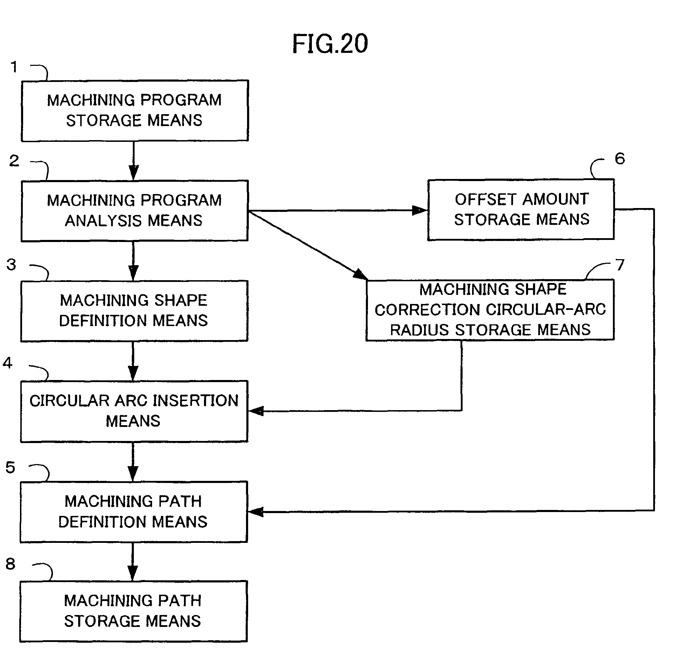

A machining path generation device for wire-cut electric discharge machine according to another embodiment of the present invention will now be described with reference to FIG. 20. The machining path generation device of the present embodiment is provided with machining program storage means 1, machining program analysis means 2, machining shape definition means 3, circular arc insertion means 4, machining path definition means 5, offset amount storage means 6, machining shape correction circular-arc radius storage means 7, and machining path storage means 8.

The machining path generation device can be constructed using an arithmetic processing unit (e.g., personal computer) independent of the controller for wire-cut electric discharge machine.

The following is a description of the means 1 to 8. The machining program storage means 1 is a means for storing a necessary machining program for machining and is composed of a nonvolatile memory. The machining program storage means 1 is pre-stored with a large number of machining programs.

The machining program analysis means 2 is a means for analyzing a machining program specified by an operator or the like, out of the machining programs stored in the machining program storage means 1, extracting data associated with the machining shape, and delivering the extracted data to the machining shape definition means 3. Further, the machining program analysis means 2 is configured to assign a necessary offset amount from an offset amount command code in the machining program to the offset amount storage means 6 and to assign a necessary circular-arc radius for machining shape correction from a machining shape correction circular-arc radius command code in the machining program to the circular-arc radius storage means 7. The machining program analysis means 2 may be configured so that the machining program is read from outside the machining path generation device by using a machining program reader instead of analyzing a machining program designated by the operator or the like, out of the machining programs stored in the machining program storage means 1.

The machining shape definition means 3 is a means for creating a machining shape based on data for the machining shape delivered from the machining program analysis means 2.

The offset amount storage means 6 is stored with a large number of necessary offset amounts of the wire electrode for machining. It is a means for selecting a necessary offset amount for each machining operation in accordance with an instruction from the machining program analysis means 2 and delivering the amount to the machining path definition means 5.

The machining shape correction circular-arc radius storage means 7 is stored with a large number of necessary machining shape correction circular-arc radii for machining. It is a means for selecting a machining shape correction circular-arc radius in accordance with an instruction from the machining program analysis means 2 and delivering the radius to the circular arc insertion means 4. As shown in FIG. 11, for example, the circular-arc radii are stored in the machining shape correction circular-arc radius storage means 7.

The circular arc insertion means 4 is a means for receiving a necessary machining shape correction circular-arc radius for machining from the machining shape correction circular-arc radius storage means 7, correcting the machining shape created by the machining shape definition means 3 by inserting the circular-arc block into the reentrant corner portion that is formed of the two intersecting motion blocks, and thereby re-creating a target machining shape.

The machining path definition means 5 creates the machining path along which the wire electrode actually moves, based on the data for the machining shape created by the circular arc insertion means 4 and the offset amount for each machining operation delivered from the offset amount storage means 6. The machining path created by the machining path definition means 5 is loaded into the machining path storage means 8.

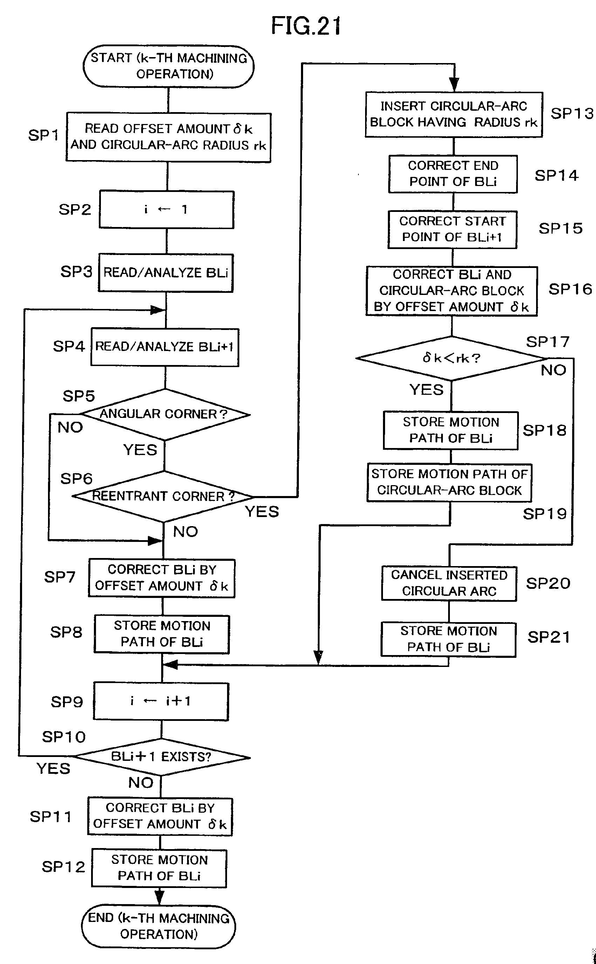

The following is a description of the general flow of processing executed by the machining path generation device in the case where the machining program is used to specify the acquisition of the machining shape including the reentrant corner portion by multi-path machining. FIG. 21 is a flowchart illustrating processing for a k-th (k = 1, 2 ... kfinal) machining operation in the multi-path machining, principally the processing associated with the insertion of the circular-arc path. The symbol kfinal designates the final machining operation.

The processing of Steps SP8, SP12, SP18, SP19 and SP21 in this flowchart is different from the processing of Steps ST8, ST12, ST18, ST19 and ST21 in the flowchart of FIG. 19, while the processing of Steps SP1 to SP7, SP9 to SP11, SP13 to SP17, and SP20 is identical with the processing of Steps ST1 to ST7, ST9 to ST11, ST13 to ST17, and ST20 of FIG 19 corresponding thereto.

More specifically, "PERFORM MOVEMENT OF BLi" in Steps ST8, ST12, ST18, ST19 and ST21 in the flowchart of FIG 19 is replaced with "STORE MOTION PATH OF BLi" in Steps SP8, SP12, SP18, SP19 and SP21, while "PERFORM MOVEMENT OF CIRCULAR-ARC BLOCK" in Step ST19 is replaced with "STORE MOTION PATH OF CIRCULAR-ARC BLOCK" in Step SP19.

If the cycle shown in the flowchart of FIG. 21 is repeated for k = 1, 2 ... kfinal, a circular-arc path calculated based on the curvature radius r of the circular arc pre-stored in the machining shape correction circular-arc radius storage means 7 and the offset amount dk stored in the offset amount storage means 6 is inserted into a reentrant corner portion that requires path modification including circular-arc path insertion, whereby the machining path is settled and stored. Thus, high-precision machining can be executed by moving the center of the wire electrode along the stored machining path.

In Step SP5, it is determined whether or not the motion blocks read in Steps SP3 and SP4 are "nonparallel linear motion blocks". If the two motion blocks are circular-arc blocks or linear and circular-arc blocks such that the angle between them at the intersection is not 180°, they are regarded as nonparallel as in the case of the two nonparallel linear motion blocks.

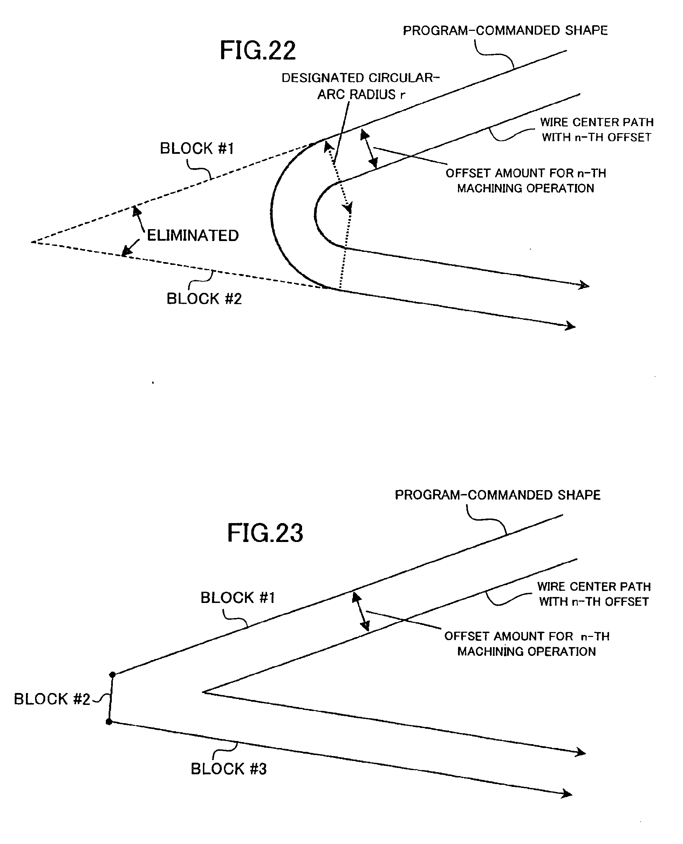

In multi-path machining such that the workpiece is repeatedly machined in a stripping fashion with the offset amount gradually reduced, the smaller the angle at the reentrant corner portion, the greater the machining depth becomes, so that the machining becomes more difficult. According to the present embodiment described above, however, the increase of the machining depth can be prevented to improve the machining accuracy by inserting the circular arc into the reentrant corner portion. FIG 22 is a diagram illustrating how a part of a reentrant corner portion that is formed of two intersecting nonparallel motion blocks is eliminated and a circular arc is inserted there. Blocks 1 and 2 form the reentrant corner portion. According to the present embodiment described above, the circular arc can be inserted in the manner illustrated.

According to the present embodiment, the reentrant corner portion is defined as a "concave corner portion formed of two intersecting nonparallel motion blocks" and expected to be formed of two straight blocks or straight and circular-arc blocks. Therefore, the circular arc according to the present embodiment cannot be inserted into a corner portion that is formed of three blocks, e.g., straight, circular-arc, and straight blocks. FIG 23 is a diagram illustrating a case where a corner portion formed of three or more blocks cannot be recognized and no circular arc is insertable. Although a non-offset programmed configuration is a reentrant shape based on blocks 1, 2 and 3, a reentrant shape formed of the blocks 1 and 2 and a concave shape formed of the blocks 2 and 3 cannot be recognized as a reentrant corner portion according to the present embodiment.

In inserting a circular arc into a corner portion formed of three or more blocks, a thin wire, that is, a program such that the corner R is inserted on the assumption that a small diameter correction amount is used for machining, for example, is machined with a thick wire, that is, a large diameter correction amount. In other words, in this case, the inserted corner R is too much smaller than the wire diameter. In this case, moreover, a fine configuration that is output by a CAM and cannot be practically machined exists at the corner portion.

Thus, if an angle between two arbitrary blocks is smaller than a pre-stored angle, according to a method for identifying a reentrant corner portion that is formed of two or more blocks, the reentrant corner portion is identified including those two blocks and a block or blocks between them. The reentrant corner portion that spans between two or more blocks is eliminated and a circular arc is inserted there.

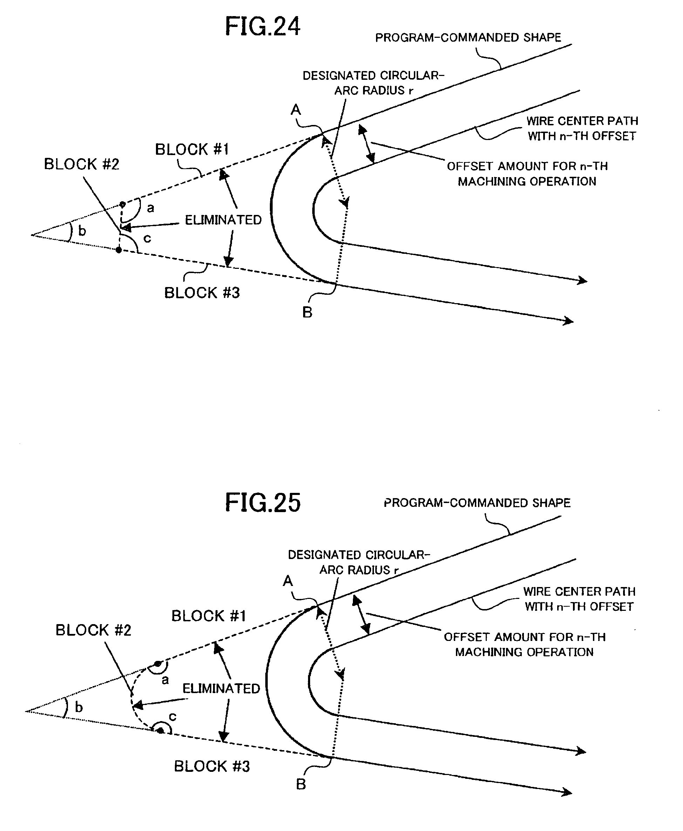

FIG. 24 is a diagram illustrating a method in which a circular arc can also be inserted into a corner portion formed of three or more blocks. According to this method, a reentrant corner portion is identified if an angle between each two blocks (which need not be adjacent to each other) is smaller than a pre-stored angle a (e.g., a = 90°). Referring to FIG. 24, an angle a between the blocks 1 and 2 is checked first. Since the angle a is greater than the angle a, the corner portion is not judged to be reentrant. Then, an angle b between the blocks 1 and 3 is checked. Since the angle b is smaller than the angle a, the corner portion is judged to be reentrant. In consequence, the end point side of the block #1, the start point side of the block #3, and the block #2 between them are eliminated, and a circular arc is inserted there. The angle between the blocks 1 and 3 is an angle at which respective extensions of the blocks 1 and 3 intersect each other.

FIG. 25 is a diagram illustrating a method in which a circular arc is insertable even when the corner R smaller than the wire diameter is inserted. The angle a between the blocks 1 and 2 is checked first. Since the angle a is greater than the angle a, the corner portion is not judged to be reentrant. Then, the angle b between the blocks 1 and 3 is checked. Since the angle b is smaller than the angle a, the corner portion is judged to be reentrant. In consequence, the end point side of the block #1, the start point side of the block #3, and the block #2 between them are eliminated, and a circular arc is inserted there.

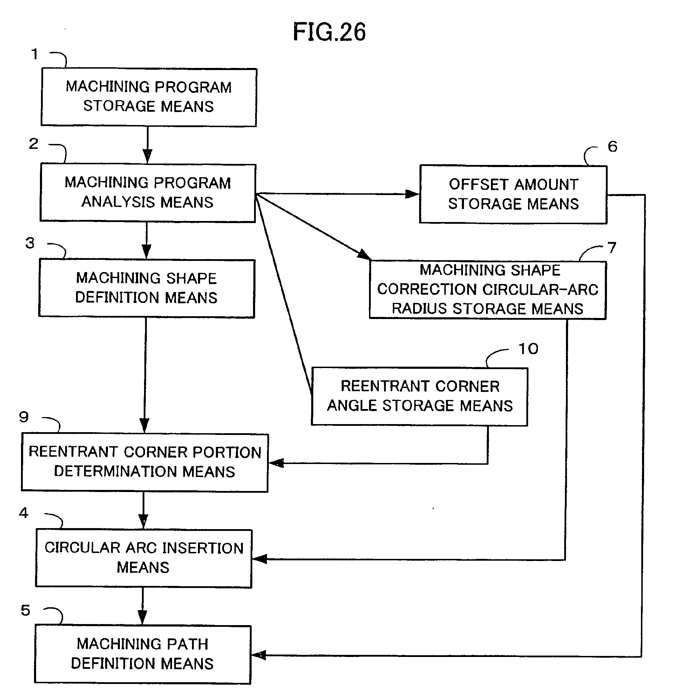

FIG. 26 is a diagram illustrating an outline of the wire-cut electric discharge machine that executes processing in the case where the reentrant corner portion is formed of two or more blocks. The electric discharge machine is provided with machining program storage means 1, machining program analysis means 2, machining shape definition means 3, circular arc insertion means 4, machining path definition means 5, offset amount storage means 6, and machining shape correction circular-arc radius storage means 7. These means are identical with those described in connection with the embodiment in which the circular arc is inserted into the reentrant corner portion formed of two blocks.

Reentrant corner portion determination means 9 is means for identifying a reentrant corner portion by determining whether or not the angle between two arbitrary blocks (which need not be adjacent to each other) is smaller than the pre-stored angle a, as mentioned before. Further, reentrant corner angle storage means 10 is means for pre-storing the angle a as a reference for the reentrant corner portion determination means 9 to identify the reentrant corner portion. Also in the block diagrams of FIGS. 10 and 20 illustrating the embodiments in which whether or not two blocks form a reentrant corner portion, the processing of the algorithms shown in the flowcharts of FIGS. 19 and 20 is executed. Thus, identification means is provided for determining whether or not two blocks form a reentrant corner portion.

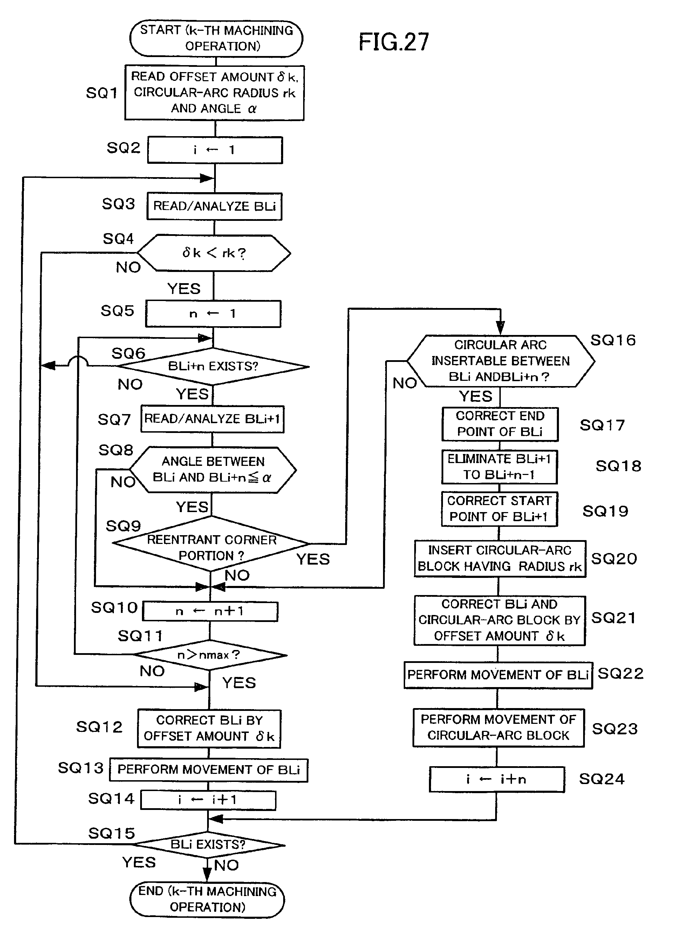

FIG. 27 is a flowchart showing an algorithm for processing for a reentrant corner portion formed of two or more blocks. The steps will now be described in succession.
- Step SQ1: The offset amount dk, circular-arc radius rk, and angle a are read. The values dk and rk are assigned by the commands shown in FIG. 16. The processing of Step SQ1 includes settlement of the offset amount dk (access to the offset amount storage means 6 and delivery of data for the assigned offset amount dk to the machining path definition means 5) and settlement of the designated circular-arc radius rk (access to the machining shape correction circular-arc radius storage means 7 and delivery of data for the designated circular-arc radius rk to the circular arc insertion means 4). The angle a is stored in the reentrant corner angle storage means 10, and the processing in Step SQ1 includes delivery of the angle a stored in the storage means 10 to the reentrant corner portion determination means 9.
- Step SQ2: The index i is initialized (i ←1)
- Step SQ3: The i-th (first) motion block is read and analyzed.
- Step SQ4: It is determined whether or not the offset amount dk is smaller than the circular-arc radius rk. If the offset amount dk is smaller than the circular-arc radius rk, the procedure proceeds to Step SQ5. If not, the procedure proceeds to Step SQ12.
- Step SQ5: The index n is initialized (n ←1)The index n is used to identify a reentrant corner portion that spans between two or more motion blocks. A maximum value nmax is preset for the maximum number of motion blocks between which the reentrant corner portion can span. If n is 1, it is determined whether or not the reentrant corner portion is formed of two motion blocks. If n is 2, the corner portion is concluded to be formed of three motion blocks, as shown in FIG. 23.
- Step SQ6: It is determined whether or not an (i+n)-th motion block is present. If the (i+n)-th motion block is present, the procedure proceeds to Step SQ7. If not, the procedure proceeds to Step SQ12.
- Step SQ7: The (i+n)-th motion block is read and analyzed.
- Step SQ8: It is determined whether an angle between the i-th and (i+n)th motion blocks is not greater than the preset angle a. If the angle is not greater than a, the procedure proceeds to Step SQ9. If the angle is greater than a, the procedure proceeds to Step SQ10. The angle between the i-th and (i+n)th motion blocks can be obtained from an angle between vectors indicative of the two motion blocks. The angle between the two vectors can be obtained based on an inner-product operation.
- Step SQ9: It is determined whether or not the i-th and (i+n)-th motion blocks form a reentrant corner portion. The method of this determination is described above. In this case, whether the angular corner portion is traced to the left or right is determined based on the outer product of vectors (oriented in the direction of movement) indicative of the i-th and (i+n)th motion blocks. By doing this, a path shift designated by the offset amount dk is checked for direction (to the left or right).

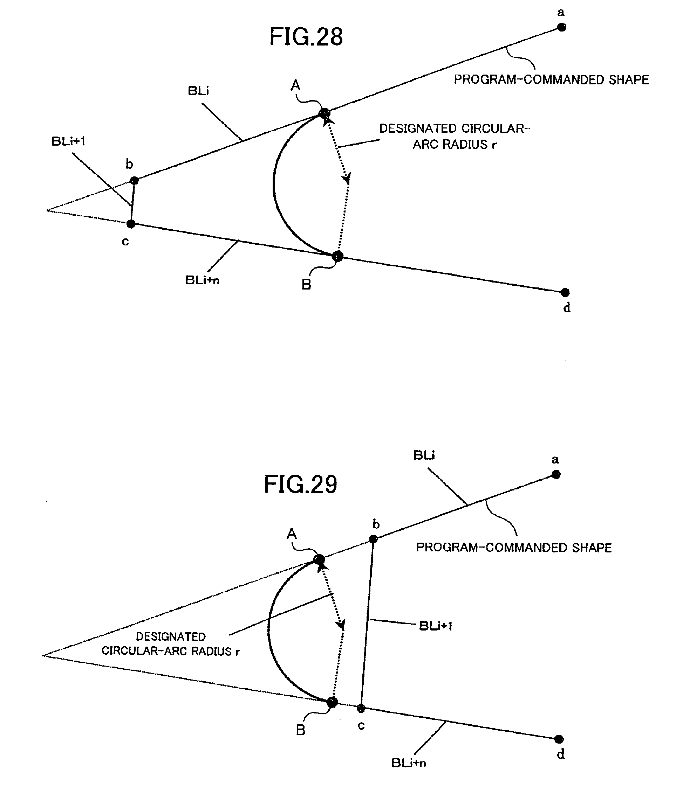

If the decision result is "left turn" so that the path shift designated by the offset amount dk is on the left-hand side with respect to the direction of advance, the angular corner portion concerned is reentrant (YES). Likewise, if the decision result is "right turn" so that the path shift designated by the offset amount dk is on the right-hand side with respect to the direction of advance, the angular corner portion concerned is reentrant (YES). In any other case, the angular corner portion is not reentrant (NO). If the corner portion is reentrant, the procedure proceeds to Step SQ16. If not, the procedure proceeds to Step SQ10.
- Step SQ10: The index n is incremented by 1 (n+1).
- Step SQ11: It is determined whether or not the index n is greater than the maximum value nmax. If the index n is greater, the procedure proceeds to Step SQ12. If not, the procedure proceeds to Step SQ6.
- Step SQ12: The motion block BLi is offset-corrected by the offset amount dk.
- Step SQ13: Processing for movement of the i-th motion block (processing such as interpolation, issuance of move commands for axis servos, etc.) is executed.
- Step SQ14: The index i is incremented by 1 (i ←i+1).
- Step SQ15: The i-th motion block is checked for presence. If the i-th motion block is present, the procedure returns to Step SQ3. If not, the k-th machining operation is terminated.
- Step SQ16: It is determined whether or not a circular arc is insertable between the i-th and (i+n)th motion blocks. If the circular arc is not insertable, the procedure proceeds to Step SQ10. If insertable, the procedure proceeds to Step SQ17. The determination in Step SQ16 on the insertability of the circular arc will be described later with reference to FIGS. 28 to 31.
- Step SQ17: The end point of the i-th motion block is corrected.
- Step SQ18: Motion blocks from the (i+1)th block to the (i+n-1)th block are eliminated.
- Step SQ19: The start point of the (i+1)th motion block is corrected. In Steps SQ17 to SQ19, the end point of the i-th motion block is corrected so that the end point of a straight path corresponding to the i-th motion block lies on that one of the opposite ends of a V-shaped straight interval eliminated as the circular-arc block is inserted which is on the straight path. Likewise, the start point of the (i+n)th motion block is corrected so that the end point of a straight path corresponding to the (i+n)th motion block lies on that one of the opposite ends of the V-shaped straight interval which is on the straight path. Referring to FIG. 24, the V-shaped interval is a section with a programmed configuration (non-offset) on the left-hand side of the circular arc with the assigned radius r.
- Step SQ20: A circular-arc block with the circular-arc radius rk is inserted.
- Step SQ21: The i-th motion block and the circular-arc block are corrected by the offset amount dk.
- Step SQ22: Processing for movement of the i-th motion block (processing such as interpolation, issuance of move commands for axis servos, etc.) is executed.
- eStep SQ23: Processing for movement of the circular-arc block (processing such as interpolation, issuance of move commands for axis servos, etc.) is executed.
- Step SQ24: The index i is incremented to (i+n), whereupon the procedure proceeds to Step SQ15.

Referring to FIGS. 28 to 31, there will be additionally described a method for determining whether or not a circular arc is insertable between the i-th and (i+n)-th motion blocks in Step SQ16. It is concluded in Step SQ16 that "a circular arc is insertable between the i-th and (i+n)-th motion blocks in Step SQ16" if both the following conditions 1 and 2 are satisfied.
Condition 1: The start and end points of the inserted circular arc are on the i-th and (i+n)-th motion blocks, respectively.
Condition 2: The inserted circular arc has no intersections with the original path between (i+1)th to (i+n-1)th. Contact with the original path is to be excluded from this condition.

FIG. 28 is a diagram illustrating a case where the conditions 1 and 2 are satisfied. Since the conditions 1 and 2 are satisfied in this case, the circular arc is insertable. A point A is the start point of a circular arc inserted onto the i-th motion block. A point B is the end point of a circular arc inserted onto the (i+n)th motion block. In this case, the inserted circular arc has neither intersections or points of contact with a motion block or blocks between the i-th and (i+n)th motion blocks.

FIG. 29 is a diagram illustrating a case where the condition 1 is not satisfied. The circular arc is not insertable in this case. The starting point A of the circular arc is not on the i-th motion block, and the end point B of the circular arc is not on the (i+n)th motion block.

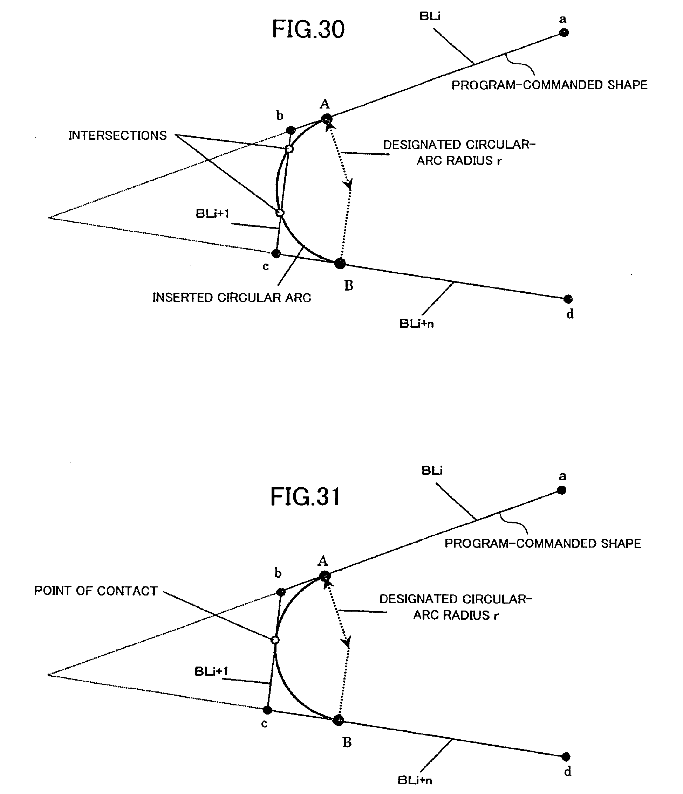

FIG. 30 is a diagram illustrating a case where the condition 1 is satisfied and the condition. 2 is not. The circular arc is not insertable in this case. Although the start and end points of the inserted circular arc are on the i-th and (i+n)th motion blocks, respectively, in this case, the extracted circular arc has an intersection with the (i+1)th motion block.

FIG. 31 is a diagram illustrating another case where the conditions 1 and 2 are satisfied. In this case, the inserted circular arc is in contact with the (i+1)th motion block.

The processing of the flowchart shown in FIG. 27 will be additionally described for the motion blocks shown in FIGS. 24 and 25. Here the angle a stored in the reentrant corner angle storage means 10 is supposed to be 90°. First, the angle a between the blocks 1 and 2 is greater than 90°, as shown in FIG. 24, so that the procedure proceeds from Step SQ8 to Step SQ10, in which n is incremented by 1 or to 2. Thus, since the value n is smaller than nmax (which is set to be greater than 2), the procedure returns to Step SQ6, in which the block #3 is read. Since the angle b (imaginary angle) between the blocks 1 and 3 is smaller than 90°, the procedure proceeds to Step SQ9, in which it is determined whether or not the corner portion is reentrant. Whether or not the circular arc is insertable is determined in Step SQ16. As shown in FIG. 25, the same processing is also performed when the block #2 is a circular-arc block. If this cycle is repeated for k = 1, 2 ... kfinal, a circular-arc path calculated based on the curvature radius r of the circular arc pre-stored in the machining shape correction circular-arc radius storage means 7 and the offset amount stored in the offset amount storage means 6 is inserted into a reentrant corner portion that requires path modification including circular-arc path insertion, whereby the machining path is settled. The wire electrode moves along this machining path, whereupon high-precision machining can be executed. In Step SQ8, it is determined whether or not the motion blocks read in Steps SQ3 and SQ7 "form an angle therebetween not greater than the angle a". In this case, it is determined whether or not the two motion blocks are circular-arc blocks or linear and circular-arc blocks such that the angle between them at the intersection (including an imaginary one) is not greater than the angle a.

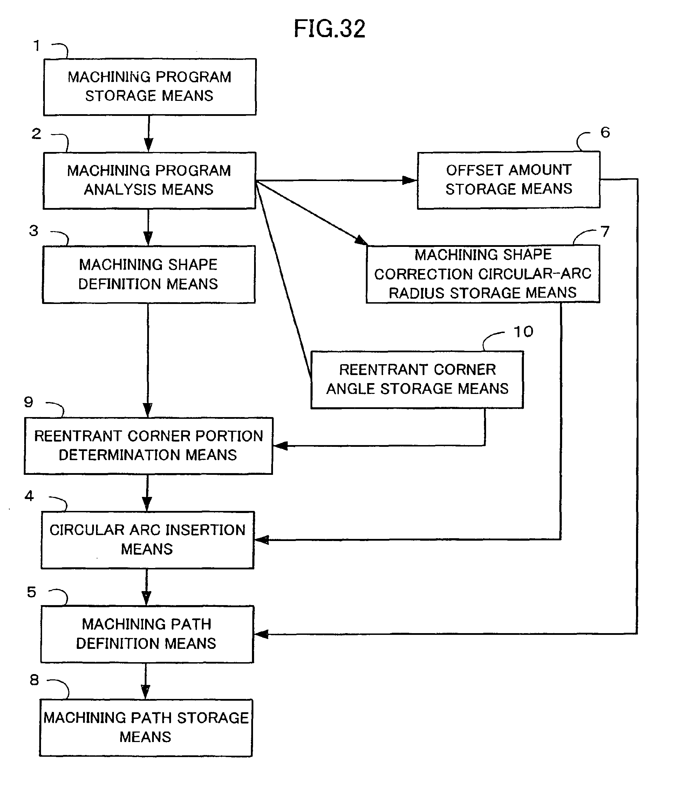

FIG. 32 is a block diagram showing an outline of the machining path generation device for wire-cut electric discharge machine according to the embodiment of the present invention and illustrates processing in the case where the reentrant corner portion is formed of two or more blocks.

The machining path generation device according to the embodiment shown in FIG. 32, which is applied to the case where the angle between two arbitrary blocks (which need not be adjacent to each other) is smaller than the pre-stored angle, is provided with machining program storage means 1, machining program analysis means 2, machining shape definition means 3, circular arc insertion means 4, machining path definition means 5, offset amount storage means 6, machining shape correction circular-arc radius storage means 7, machining path storage means 8, reentrant corner portion determination means 9, and reentrant corner angle storage means 10.

The machining path generation device can be constructed using an arithmetic processing unit (e.g., personal computer) independent of the controller for wire-cut electric discharge machine.

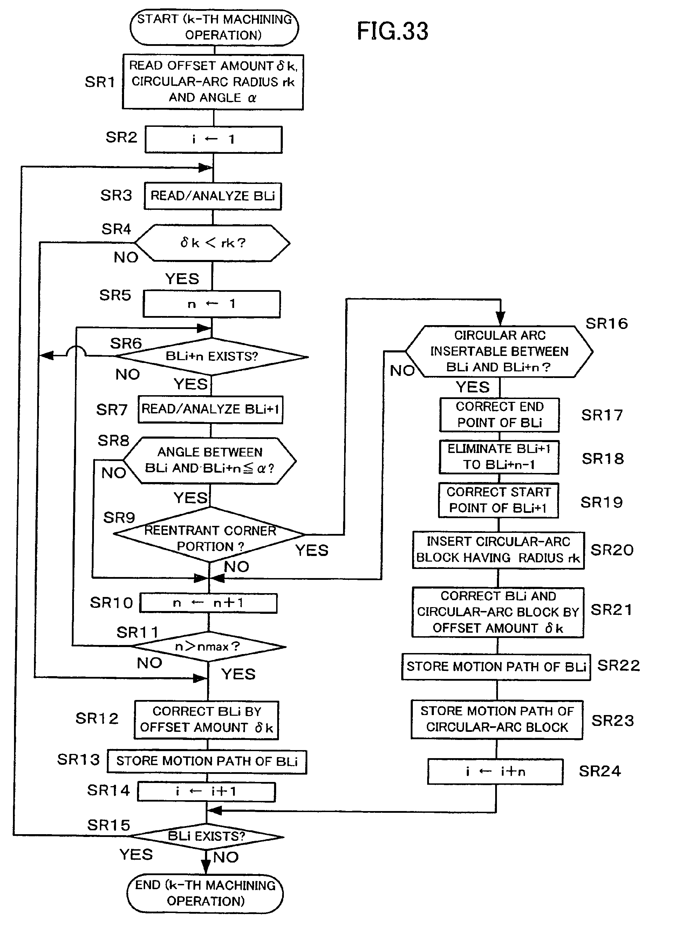

FIG. 33 is a flowchart illustrating an outline of processing of the machining path generation device for wire-cut electric discharge machine in which a machining shape including a reentrant corner portion formed of two or more blocks is obtained by multi-path machining, principally an algorithm for the processing associated with the insertion of the circular-arc path.

The processing of Steps SR13, SR22 and SR23 in this flowchart is different from the processing of Steps SQ13, SQ22 and SQ23 in the flowchart of FIG. 27, while the processing of Steps SR1 to SR12, SR14 to SR21, and SR24 is identical with the processing of Steps SQ1 to SQ12, SQ14 to SQ21, and SQ 24 of FIG 27 corresponding thereto.

More specifically, "MOVE BLi" in Steps SQ13 and SQ22 in the flowchart of FIG. 27 is replaced with "STORE PATH OF BLi" in Steps SR13 and SR 22, while "MOVE INSERTED CIRCULAR-ARC BLOCK" in Step SQ23 is replaced with "STORE MACHINING PATH OF INSERTED CIRCULAR-ARC BLOCK" in Step SR23.

If the cycle shown in the flowchart of FIG. 33 is repeated for k = 1, 2 ... kfinal, a circular-arc path calculated based on the curvature radius r of the circular arc pre-stored in the machining shape correction circular-arc radius storage means 7 and the offset amount dk stored in the offset amount storage means 6 is inserted into a reentrant corner portion that requires path modification including circular-arc path insertion, whereby the machining path is settled and stored. Thus, high-precision machining can be executed by moving the center of the wire electrode along the stored machining path.

In Step SR8, it is determined whether or not the motion blocks read in Steps SR3 and SR7 "form an angle therebetween not greater than the angle a". In this case, it is determined whether or not the two motion blocks are circular-arc blocks or linear and circular-arc blocks such that the angle between them at the intersection (including an imaginary one) is not greater than the angle a.

The method of determination in Step SQ16 on the insertability of the circular arc is the same as the method of FIG. 27 described with reference to FIGS. 28 to 31.

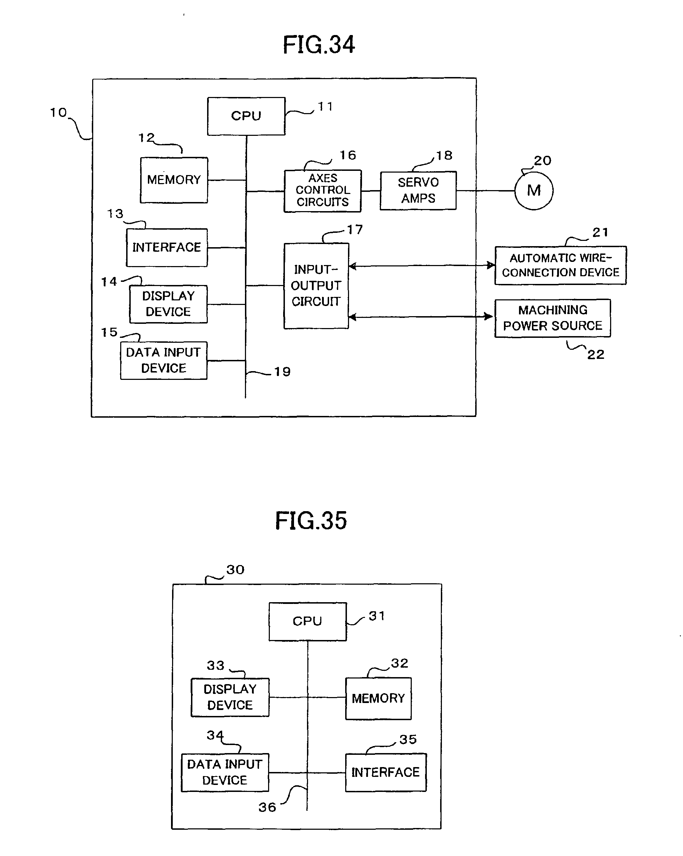

FIG. 34 is a block diagram showing essential parts of a controller of a wire-cut electric discharge machine according to an embodiment of the present invention.

A controller 10 of the wire-cut electric discharge machine 10 of the present embodiment is comprised of a numerical controller, which is itself comprised of a CPU 11 and a memory 12 comprised of a ROM, A RAM, and the like and connected to the CPU 11 by a bus 19, an interface 13, a display device 14 comprised of a CRT or liquid crystal, a data input device 15 such as a keyboard or the like, axes control circuits 16 that drivingly control the servo motors of the axes, an input-output circuit 17, and servo amps 18 connected to the axes control circuits 16.

The axes control circuits 16, in the wire-cut electric discharge machine, control the position, velocity, and electrical current of the servo motors 20 that move the movable axes that in turn move the wire relative to the workpiece. The axes control circuits 16 are comprised of a CPU, a memory, and so forth, and carry out position and velocity feedback control using position and velocity feedback from position/velocity sensors, not shown, that are provided on the servo motors 20 as well as motion commands issued from the CPU 11, and further, carry out electrical current feedback control and drive the servo motors 20 via the servo amps 18.

An automatic wire-connection device 21 and a machining power source 22, and further, a peripheral device, not shown, are connected to the input-output circuit 17. In addition, the machining program is inputted via the interface 13 and stored in the memory 12. Alternatively, the machining program is generated using the display device 14 and the data input device 15, and stored in the memory 12.

The CPU 11 reads out the machining program stored in the memory 12, analyzes the commands for each block of the machining program, and, based on the results of that analysis, outputs motion commands to the axes control circuits 16 or outputs automatic wire-connection device 21 and machining power source 22 on/off commands to the input-output circuit 17. At the axes control circuits 16, position and velocity feed back control is carried out based on the motion commands from the CPU 11 and on the position and velocity feedback from the position/velocity sensors to drive and to control via the servo amps 18 the positions and the velocities of the servo motors 20 of the axes (that is, an X axis, a Y axis, and a Z axis, and further, a U axis and a V axis) that move the wire relative to the workpiece 3.

The hardware configuration of the controller of the wire-cut electric discharge machine described above is substantially identical to that of the conventional controller for the wire-cut electric discharge machine. The respective storage means 1, 6 and 7 as shown in FIG. 10 are constituted by the memory 12 and the other means 2-5 are constituted by the CPU 11, the interface 13, the display device 14, the date input device 15 and software stored in the memory 12. Further, the respective storage means 1, 6, 7 and 10 as shown in FIG. 26 are constituted by the memory 12 and the other means 2-5 and 9-10 are constituted by the CPU 11, the interface 13, the display device 14, the date input device and software stored in the memory 12.

FIG. 35 is a block diagram showing essential parts of one embodiment of a machining path generation device of the present invention. A machining path generation device 30 is comprised of a conventional information processing device such as a personal computer, a numerical controller, or the like, which is in turn comprised of a CPU 31, a memory 32 comprised of a ROM, a RAM and the like connected to the CPU 31 by a bus 36, a display device 33 comprised of a CRT, liquid crystal or the like, a data input device 34 such as a keyboard to input data and commands, and an interface 35.

The respective storage means 1 and 6-8 as shown in FIG. 20 are constituted by the memory 32 and the other means 2-5 are constituted by the CPU 31, the interface 35, the display device 33, the date input device 34 and software stored in the memory 32. Further, the respective storage means 1, 6-8 and 10 as shown in FIG. 32 are constituted by the memory 32 and the other means 2-5 and 9-10 are constituted by the CPU 31, the interface 35, the display device 33, the date input device 34 and software stored in the memory 32.

## Claims

1. A controller of a wire-cut electric discharge machine for machining a workpiece by performing a plurality of machining operations the workpiece, said controller comprising:
machining program storage means (1) arranged to store a machining program;
offset amount storage means (6) arranged to store wire offset amounts respective for the plurality of machining operations;
machining program analysis means (2) arranged to analyze the machining program stored in said machining program storage means;
machining shape definition means (3) for defining a machining shape of the workpiece based on an analysis result by said machining program analysis means, **characterised by**;
circular-arc radius storage means (7) arranged to store predetermined radii of circular-arcs for correction of the machining shape;
reentrant corner angle storage means (10) arranged to store a predetermined angle for discriminating a reentrant corner portion;
reentrant angular corner portion determination means (9) arranged to successively determine an angle formed between one motion block and another motion block in a predetermined number of successive motion blocks defining the machining shape and successively determine a reentrant angular corner portion if the determined angle is not greater than the stored predetermined angle and a circular arc having one of the stored predetermined radii is insertable; and
circular-arc shape insertion means (4) arranged to eliminate a part or the whole of each of the successive motion blocks that form the determined reentrant angular corner portion and insert a circular-arc motion block having one of the stored predetermined radii into an eliminated portion of the reentrant angular corner portion, to correct the machining shape.

2. A controller of a wire-cut electric discharge machine for machining a workpiece by performing a plurality of machining operations the workpiece, said controller comprising:
machining program storage means (1) arranged to store a machining program;
offset amount storage means (6) arranged to store wire offset amounts respective for the plurality of machining operations;
machining program analysis means (2) arranged to analyze the machining program stored in said machining program storage means;
machining shape defining means (3) arranged to define a machining shape of the workpiece based on an analysis result by said machining program analysis means, **characterised by**;
circular-arc radius storage means (7) arranged to store predetermined radii of circular-arcs for correction of the machining shape; and
circular-arc shape insertion means (4) arranged to eliminate a vertex portion of a reentrant angular corner portion formed by two intersecting nonparallel motion blocks defining the machining shape and insert a circular-arc motion block having one of the stored predetermined radii to the eliminated vertex portion of the reentrant angular corner portion, to correct the machining shape.

3. A controller of a wire-cut electric discharge machine according to claim 1 or 2, further comprising machining path definition means (5) arranged to define machining paths for the plurality of machining operations by respectively offsetting the corrected machining shape by the wire offset amounts stored in said offset amount storage means.

4. A controller of a wire-cut electric discharge machine according to any one of claims 1 to 3, wherein said circular-arc shape insertion means (4) inserts the circular-arc motion block in contact with two motion blocks constituting the reentrant angular corner portion.

5. A controller of a wire-cut electric discharge machine according to any one of claims 1 to 4, wherein the motion blocks are straight-line motion blocks.

6. A machining path generation device for a wire-cut electric discharge machine for machining a workpiece by performing a plurality of machining operations on the workpiece, said device comprising:
machining program storage means (1) arranged to store a machining program;
offset amount storage means (6) arranged to store wire offset amounts respective for the plurality of machining operations;
machining program analysis means (2) arranged to analyze the machining program stored in said machining program storage means;
machining shape definition means (3) for defining a machining shape of the workpiece based on an analysis result by said machining program analysis means, **characterised by**;
circular-arc radius storage means (7) arranged to store predetermined radii of circular-arcs for correction of the machining shape;
reentrant corner angle storage means (10) arranged to store a predetermined angle for discriminating a reentrant corner portion;
reentrant angular corner portion determination means (9) arranged to successively determine an angle formed between one motion block and another motion block in a predetermined number of successive motion blocks defining the machining shape and successively determine a reentrant angular corner portion if the determined angle is not greater than the stored predetermined angle and a circular arc having one of the stored predetermined radii is insertable; and
circular-arc shape insertion means (4) arranged to eliminate a part or the whole of each of the successive motion blocks that form the determined reentrant angular corner portion and insert a circular-arc motion block having one of the stored predetermined radii into an eliminated portion of the reentrant angular corner portion, to correct the machining shape.

7. A machining path generation device for a wire-cut electric discharge machine for machining a workpiece by performing a plurality of machining operations on the workpiece, said controller comprising:
machining program storage means (1) arranged to store a machining program;
offset amount storage means (6) arranged to store wire offset amounts respective for the plurality of machining operations;
machining program analysis means (2) arranged to analyze the machining program stored in said machining program storage means;
machining shape defining means (3) arranged to define a machining shape of the workpiece based on an analysis result by said machining program analysis means, **characterised by**;
circular-arc radius storage means (7) arranged to store predetermined radii of circular-arcs for correction of the machining shape; and
circular-arc shape insertion means (10) arranged to eliminate a vertex portion of a reentrant angular corner portion formed by two intersecting nonparallel motion blocks defining the machining shape and insert a circular-arc motion block having one of the stored predetermined radii to the eliminated vertex portion of the reentrant angular corner portion, to correct the machining shape.

8. A machining path generation device for a wire-cut electric discharge machine according to claim 6 or 7, further comprising machining path definition means (5) arranged to define machining paths for the plurality of machining operations by respectively offsetting the corrected machining shape by the wire offset amounts stored in said offset amount storage means.

9. A machining path generation device for a wire-cut electric discharge machine according to any one of claims 6 to 8, wherein said circular-arc shape insertion means (4) inserts the circular-arc motion block in contact with two motion blocks constituting the reentrant angular corner portion.

10. A machining path generation device for a wire-cut electric discharge machine according to any one of claims 6 to 9, wherein the motion blocks are straight-line motion blocks.

## Patentansprüche

1. Steuerung für eine Schneiddraht-Funkenerosionsmaschine zum Bearbeiten eines Werkstücks durch Ausführen einer Anzahl Bearbeitungsschritte am Werkstück, wobei die Steuerung umfasst
Bearbeitungsprogramm-Speichermittel (1), ausgelegt zum Speichern eines Bearbeitungsprogramms;
Versatzmengenspeichermittel (6), ausgelegt zum Speichern von Drahtversatzmengen für jeden aus der Anzahl Bearbeitungsschritte;
Bearbeitungsprogramm-Analysemittel (2), ausgelegt zum Analysieren des im Bearbeitungsprogramm-Speichermittel gespeicherten Bearbeitungsprogramms;
Bearbeitungsform-Definiermittel (3) zum Definieren einer Bearbeitungsform des Werkstücks auf der Basis eines Analyseergebnisses vom Bearbeitungsprogramm-Analysemittel, **gekennzeichnet durch**
Kreisbogenradius-Speichermittel (7), ausgelegt zum Speichern von vorbestimmten Radien von Kreisbögen zur Korrektur der Bearbeitungsform;
Speichermittel für Winkel einer einspringenden Ecke (10), ausgelegt zum Speichern eines vorbestimmten Winkels zum Unterscheiden eines Abschnitts mit einspringendem Winkel;
Feststellmittel für einspringenden Eckwinkelabschnitt (9), ausgelegt zur aufeindanderfolgenden Feststellung eines Winkels zwischen einem Bewegungsblock und einem weiteren Bewegungsblock in einer vorbestimmten Anzahl aufeinanderfolgender Bewegungsblöcke, welche die Bearbeitungsform definieren und zur aufeinanderfolgenden Feststellung eines einspringenden Eckwinkelabschnitts, wenn der festgestellte Winkel nicht größer ist, als der gespeicherte vorbestimmte Winkel und ein Winkelbogen mit einem der gespeicherten vorbestimmten Radien einfügbar ist; und
Kreisbogenform-Einfügemittel (4), ausgelegt zum Entfernen eines Teils oder des Ganzen von jedem der aufeinanderfolgenden Bewegungsblöcke, welche den festgestellten einspringenden Eckwinkelabschnitt bilden und einen Kreisbogen-Bewegungsblock mit einem der gespeicherten vorbestimmten Radien in einen entfernten Abschnitt des einspringenden Eckwinkelabschnitts einfügen, um die Bearbeitungsform zu korrigieren.

2. Steuerung für eine Schneiddraht-Funkenerosionsmaschine zum Bearbeiten eines Werkstücks durch Ausführen einer Anzahl Bearbeitungsschritte am Werkstück, wobei die Steuerung umfasst
Bearbeitungsprogramm-Speichermittel (1), ausgelegt zum Speichern eines Bearbeitungsprogramms;
Versatzmengenspeichermittel (6), ausgelegt zum Speichern von Drahtversatzmengen für jeden aus der Anzahl Bearbeitungsschritte;
Bearbeitungsprogramm-Analysemittel (2), ausgelegt zum Analysieren des im Bearbeitungsprogramm-Speichermittel gespeicherten Bearbeitungsprogramms;
Bearbeitungsform-Definiermittel (3), ausgelegt zum Definieren einer Bearbeitungsform des Werkstücks auf der Basis eines Analyseergebnisses vom Bearbeitungsprogramm-Analysemittel, **gekennzeichnet durch**
Kreisbogenradius-Speichermittel (7), ausgelegt zum Speichern von vorbestimmten Radien von Kreisbögen zur Korrektur der Bearbeitungsform;
Kreisbogenform-Einfügemittel (4), ausgelegt zum Entfernen eines Vertexabschnitts eines einspringenden Eckwinkelabschnitts, gebildet **durch** zwei sich überschneidende nicht parallele Bewegungsblöcke, welche die Bearbeitungsform definieren, und zum Einfügen eines Kreisbogen-Bewegungsblocks mit einem der gespeicherten vorbestimmten Radien in den entfernten Vertexabschnitt des einspringenden Eckwinkelabschnitts, um die Bearbeitungsform zu korrigieren.

3. Steuerung für eine Schneiddraht-Funkenerosionsmaschine gemäß Anspruch 1 oder 2, zudem umfassend Bearbeitungsweg-Definitonsmittel (5), ausgelegt zum Definieren von Bearbeitungswegen für die Anzahl Bearbeitungsschritte durch jeweiliges Versetzen der korrigierten Bearbeitungsform durch die im Versatzmengenspeichermittel gespeicherten Drahtversatzmengen.

4. Steuerung für eine Schneiddraht-Funkenerosionsmaschine gemäß irgendeinem der Ansprüche 1 bis 3, wobei das Kreisbogenform-Einfügemittel (4) den Kreisbogen-Bewegungsblock in Berührung mit zwei den einspringenden Eckwinkelabschnitt bildenden Bewegungsblöcken einfügt.

5. Steuerung für eine Schneiddraht-Funkenerosionsmaschine gemäß irgendeinem der Ansprüche 1 bis 4, wobei die Bewegungsblöcke gradlinige Bewegungsblöcke sind.

6. Vorrichtung zum Erzeugen eines Bearbeitungspfads für eine Schneiddraht-Funkenerosionsmaschine zum Bearbeiten eines Werkstücks durch Ausführen einer Anzahl Bearbeitungsschritte am Werkstück, wobei die Steuerung umfasst
Bearbeitungsprogramm-Speichermittel (1), ausgelegt zum Speichern eines Bearbeitungsprogramms;
Versatzmengenspeichermittel (6), ausgelegt zum Speichern von Drahtversatzmengen für jeden aus der Anzahl Bearbeitungsschritte;
Bearbeitungsprogramm-Analysemittel (2), ausgelegt zum Analysieren des im Bearbeitungsprogramm-Speichermittel gespeicherten Bearbeitungsprogramms;
Bearbeitungsform-Definiermittel (3) zum Definieren einer Bearbeitungsform des Werkstücks auf der Basis eines Analyseergebnisses vom Bearbeitungsprogramm-Analysemittel, **gekennzeichnet durch**
Kreisbogenradius-Speichermittel (7), ausgelegt zum Speichern von vorbestimmten Radien von Kreisbögen zur Korrektur der Bearbeitungsform;
Speichermittel für Winkel einer einspringenden Ecke (10), ausgelegt zum Speichern eines vorbestimmten Winkels zum Unterscheiden eines Abschnitts mit einspringendem Winkel;
Feststellmittel für einspringenden Eckwinkelabschnitt (9), ausgelegt zur aufeindanderfolgenden Feststellung eines Winkels zwischen einem Bewegungsblock und einem weiteren Bewegungsblock in einer vorbestimmten Anzahl aufeinanderfolgender Bewegungsblöcke, welche die Bearbeitungsform definieren und zur aufeinanderfolgenden Feststellung eines einspringenden Eckwinkelabschnitts, wenn der festgestellte Winkel nicht größer ist, als der gespeicherte vorbestimmte Winkel und ein Winkelbogen mit einem der gespeicherten vorbestimmten Radien einfügbar ist; und
Kreisbogenform-Einfügemittel (4), ausgelegt zum Entfernen eines Teils oder des Ganzen von jedem der aufeinanderfolgenden Bewegungsblöcke, welche den festgestellten einspringenden Eckwinkelabschnitt bilden und einen Bogenwinkel-Bewegungsblock mit einem der gespeicherten vorbestimmten Radien in einen entfernten Abschnitt des einspringenden Eckwinkelabschnitts einfügen, um die Bearbeitungsform zu korrigieren.

7. Vorrichtung zum Erzeugen eines Bearbeitungspfads für eine Schneiddraht-Funkenerosionsmaschine zum Bearbeiten eines Werkstücks durch Ausführen einer Anzahl Bearbeitungsschritte am Werkstück, wobei die Steuerung umfasst
Bearbeitungsprogramm-Speichermittel (1), ausgelegt zum Speichern eines Bearbeitungsprogramms;
Versatzmengenspeichermittel (6), ausgelegt zum Speichern von Drahtversatzmengen für jeden aus der Anzahl Bearbeitungsschritte;
Bearbeitungsprogramm-Analysemittel (2), ausgelegt zum Analysieren des im Bearbeitungsprogramm-Speichermittel gespeicherten Bearbeitungsprogramms;
Bearbeitungsform-Definiermittel (3) zum Definieren einer Bearbeitungsform des Werkstücks auf der Basis eines Analyseergebnisses vom Bearbeitungsprogramm-Analysemittel, **gekennzeichnet durch**
Kreisbogenradius-Speichermittel (7), ausgelegt zum Speichern von vorbestimmten Radien von Kreisbögen zur Korrektur der Bearbeitungsform;
Kreisbogenform-Einfügemittel (10), ausgelegt zum Entfernen eines Vertexabschnitts eines einspringenden Eckwinkelabschnitts, gebildet **durch** zwei sich überschneidende nicht parallele Bewegungsblöcke, welche die Bearbeitungsform definieren, und zum Einfügen eines Bogenwinkel-Bewegungsblocks mit einem der gespeicherten vorbestimmten Radien in den entfernten Vertexabschnitt des einspringenden Eckwinkelabschnitts, um die Bearbeitungsform zu korrigieren.

8. Vorrichtung zum Erzeugen eines Bearbeitungspfads für eine Schneiddraht-Funkenerosionsmaschine gemäß Anspruch 6 oder 7. zudem umfassend Bearbeitungsweg-Definitonsmittel (5), ausgelegt zum Definieren von Bearbeitungswegen für die Anzahl Bearbeitungsschritte durch jeweiliges Versetzen der korrigierten Bearbeitungsform durch die im Versatzmengenspeichermittel gespeicherten Drahtversatzmengen.

9. Vorrichtung zum Erzeugen eines Bearbeitungspfads für eine Schneiddraht-Funkenerosionsmaschine gemäß irgendeinem der Ansprüche 6 bis 8, wobei das Kreisbogenform-Einfügemittel (4) den Kreisbogen-Bewegungsblock in Berührung mit zwei den einspringenden Eckwinkelabschnitt bildenden Bewegungsblöcken einfügt.

10. Vorrichtung zum Erzeugen eines Bearbeitungspfads für eine Schneiddraht-Funkenerosionsmaschine gemäß irgendeinem der Ansprüche 6 bis 9, wobei die Bewegungsblöcke gradlinige Bewegungsblöcke sind.

## Revendications

1. Contrôleur d'une machine à décharge électrique de découpe de fil électrique pour usiner une pièce de fabrication en réalisant une pluralité d'opérations d'usinage sur la pièce de fabrication, ledit contrôleur comprenant :
un moyen de stockage de programme d'usinage (1) agencé pour stocker un programme d'usinage ;
un moyen de stockage de quantité de décalage (6) agencé pour stocker des quantités de décalage de fil électrique respectives pour la pluralité d'opérations d'usinage ;
un moyen d'analyse de programme d'usinage (2) agencé pour analyser le programme d'usinage stocké dans ledit moyen de stockage de programme d'usinage ;
un moyen de définition de forme d'usinage (3) pour définir une forme d'usinage de la pièce de fabrication en fonction d'un résultat d'analyse par ledit moyen d'analyse de programme d'usinage, **caractérisé par** :
un moyen de stockage de rayon d'arc circulaire (7) agencé pour stocker des rayons prédéterminés d'arcs circulaires pour la correction de la forme d'usinage ;
un moyen de stockage d'angle de coin rentrant (10) agencé pour stocker un angle prédéterminé pour la différenciation d'une portion de coin rentrant ; un moyen de détermination de portion de coin angulaire rentrant (9) agencé pour déterminer successivement un angle formé entre un bloc de mouvement et un autre bloc de mouvement dans un nombre prédéterminé de blocs de mouvement successifs définissant la forme d'usinage et déterminer successivement une portion de coin angulaire rentrant si l'angle déterminé n'est pas supérieur à l'angle prédéterminé stocké et un arc circulaire ayant un des rayons prédéterminés stockés peut être inséré ; et
un moyen d'insertion de forme d'arc circulaire (4) agencé pour éliminer une partie ou l'ensemble de chacun des blocs de mouvement successifs qui forment la portion de coin angulaire rentrant déterminée et insérer un bloc de mouvement à arc circulaire ayant un des rayons prédéterminés stockés dans une portion éliminée de la portion de coin angulaire rentrant afin de corriger la forme d'usinage.

2. Contrôleur d'une machine à décharge électrique de découpe de fil électrique pour usiner une pièce de fabrication en réalisant une pluralité d'opérations d'usinage sur la pièce de fabrication, ledit contrôleur comprenant :
un moyen de stockage de programme d'usinage (1) agencé pour stocker un programme d'usinage ;
un moyen de stockage de quantité de décalage (6) agencé pour stocker des quantités de décalage de fil électrique respectives pour la pluralité d'opérations d'usinage ;
un moyen d'analyse de programme d'usinage (2) agencé pour analyser le programme d'usinage stocké dans ledit moyen de stockage de programme d'usinage ;
un moyen de définition de forme d'usinage (3) agencé pour définir une forme d'usinage de la pièce de fabrication en fonction d'un résultat d'analyse par ledit moyen d'analyse de programme d'usinage, **caractérisé par** :
un moyen de stockage de rayon d'arc circulaire (7) agencé pour stocker des rayons prédéterminés d'arcs circulaires pour la correction de la forme d'usinage ; et
un moyen d'insertion de forme d'arc circulaire (4) agencé pour éliminer une portion de sommet d'une portion de coin angulaire rentrant formée par deux blocs de mouvement non parallèles qui se coupent définissant la forme d'usinage et insérer un bloc de mouvement à arc circulaire ayant un des rayons prédéterminés stockés dans la portion de sommet éliminée de la portion de coin angulaire rentrant afin de corriger la forme d'usinage.

3. Contrôleur d'une machine à décharge électrique de découpe de fil électrique selon la revendication 1 ou 2, comprenant en outre un moyen de définition de chemin d'usinage (5) agencé pour définir des chemins d'usinage pour la pluralité d'opérations d'usinage en décalant respectivement la forme d'usinage corrigée par les quantités de décalage de fil électrique stockées dans ledit moyen de stockage de quantité de décalage.

4. Contrôleur d'une machine à décharge électrique de découpe de fil électrique selon l'une quelconque des revendications 1 à 3, dans lequel ledit moyen d'insertion de forme d'arc circulaire (4) insère le bloc de mouvement à arc circulaire en contact avec deux blocs de mouvement constituant la portion de coin angulaire rentrant.

5. Contrôleur d'une machine à décharge électrique de découpe de fil électrique selon l'une quelconque des revendications 1 à 4, dans lequel les blocs de mouvement sont des blocs de mouvement à ligne droite.

6. Dispositif de génération de chemin d'usinage pour une machine à décharge électrique de découpe de fil électrique pour usiner une pièce de fabrication en réalisant une pluralité d'opérations d'usinage sur la pièce de fabrication, ledit dispositif comprenant :
un moyen de stockage de programme d'usinage (1) agencé pour stocker un programme d'usinage ;
un moyen de stockage de quantité de décalage (6) agencé pour stocker des quantités de décalage de fil électrique respectives pour la pluralité d'opérations d'usinage ;
un moyen d'analyse de programme d'usinage (2) agencé pour analyser le programme d'usinage stocké dans ledit moyen de stockage de programme d'usinage ;
un moyen de définition de forme d'usinage (3) pour définir une forme d'usinage de la pièce de fabrication en fonction d'un résultat d'analyse par ledit moyen d'analyse de programme d'usinage, **caractérisé par** :
un moyen de stockage de rayon d'arc circulaire (7) agencé pour stocker des rayons prédéterminés d'arcs circulaires pour la correction de la forme d'usinage ;
un moyen de stockage d'angle de coin rentrant (10) agencé pour stocker un angle prédéterminé pour la différenciation d'une portion de coin rentrant ;
un moyen de détermination de portion de coin angulaire rentrant (9) agencé pour déterminer successivement un angle formé entre un bloc de mouvement et un autre bloc de mouvement dans un nombre prédéterminé de blocs de mouvement successifs définissant la forme d'usinage et déterminer successivement une portion de coin angulaire rentrant si l'angle déterminé n'est pas supérieur à l'angle prédéterminé stocké et un arc circulaire ayant un des rayons prédéterminés stockés peut être inséré ; et
un moyen d'insertion de forme d'arc circulaire (4) agencé pour éliminer une partie ou l'ensemble de chacun des blocs de mouvement successifs qui forment la portion de coin angulaire rentrant déterminée et insérer un bloc de mouvement à arc circulaire ayant un des rayons prédéterminés stockés dans une portion éliminée de la portion de coin angulaire rentrant afin de corriger la forme d'usinage.

7. Dispositif de génération de chemin d'usinage pour une machine à décharge électrique de découpe de fil électrique pour usiner une pièce de fabrication en réalisant une pluralité d'opérations d'usinage sur la pièce de fabrication, ledit contrôleur comprenant :
un moyen de stockage de programme d'usinage (1) agencé pour stocker un programme d'usinage ;
un moyen de stockage de quantité de décalage (6) agencé pour stocker des quantités de décalage de fil électrique respectives pour la pluralité d'opérations d'usinage ;
un moyen d'analyse de programme d'usinage (2) agencé pour analyser le programme d'usinage stocké dans ledit moyen de stockage de programme d'usinage ;
un moyen de définition de forme d'usinage (3) agencé pour définir une forme d'usinage de la pièce de fabrication en fonction d'un résultat d'analyse par ledit moyen d'analyse de programme d'usinage, **caractérisé par** :
un moyen de stockage de rayon d'arc circulaire (7) agencé pour stocker des rayons prédéterminés d'arcs circulaires pour la correction de la forme d'usinage ; et
un moyen d'insertion de forme d'arc circulaire (10) agencé pour éliminer une portion de sommet d'une portion de coin angulaire rentrant formée par deux blocs de mouvement non parallèles qui se coupent définissant la forme d'usinage et insérer un bloc de mouvement à arc circulaire ayant un des rayons prédéterminés stockés dans la portion de sommet éliminée de la portion de coin angulaire rentrant afin de corriger la forme d'usinage.

8. Dispositif de génération de chemin d'usinage pour une machine à décharge électrique de découpe de fil électrique selon la revendication 6 ou 7, comprenant en outre un moyen de définition de chemin d'usinage (5) agencé pour définir des chemins d'usinage pour la pluralité d'opérations d'usinage en décalant respectivement la forme d'usinage corrigée par les quantités de décalage de fil électrique stockées dans ledit moyen de stockage de quantité de décalage.

9. Dispositif de génération de chemin d'usinage pour une machine à décharge électrique de découpe de fil électrique selon l'une quelconque des revendications 6 à 8, dans lequel ledit moyen d'insertion de forme d'arc circulaire (4) insère le bloc de mouvement à arc circulaire en contact avec deux blocs de mouvement constituant la portion de coin angulaire rentrant.

10. Dispositif de génération de chemin d'usinage pour une machine à décharge électrique de découpe de fil électrique selon l'une quelconque des revendications 6 à 9, dans lequel les blocs de mouvement sont des blocs de mouvement à ligne droite.
